(19) Europäisches Patentamt / European Patent Office / Office européen des brevets

(11) **EP 4 539 411 A1**

(12) **EUROPEAN PATENT APPLICATION**
published in accordance with Art. 153(4) EPC

(43) Date of publication:
16.04.2025 Bulletin 2025/16

(21) Application number: 23839826.7

(22) Date of filing: 20.06.2023

(51) International Patent Classification (IPC):
$H04L\ 27/26^{(2006.01)}$    $H04L\ 27/20^{(2006.01)}$
$H04L\ 5/00^{(2006.01)}$    $H04L\ 5/02^{(2006.01)}$
$H04J\ 11/00^{(2006.01)}$

(52) Cooperative Patent Classification (CPC):
H04J 11/00; H04L 5/00; H04L 5/02; H04L 27/20;
H04L 27/26

(86) International application number:
PCT/KR2023/008562

(87) International publication number:
WO 2024/014732 (18.01.2024 Gazette 2024/03)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 11.07.2022 KR 20220084903
19.07.2022 KR 20220089065

(71) Applicant: Samsung Electronics Co., Ltd.
Suwon-si, Gyeonggi-do 16677 (KR)

(72) Inventors:
• SHIN, Myeongcheol
Suwon-si Gyeonggi-do 16677 (KR)
• SHIM, Seijoon
Suwon-si Gyeonggi-do 16677 (KR)

(74) Representative: HGF
HGF Limited
1 City Walk
Leeds LS11 9DX (GB)

(54) **ELECTRONIC DEVICE AND METHOD FOR PROVIDING REMOTE INTERFERENCE MANAGEMENT-REFERENCE SIGNAL IN FRONTHAUL INTERFACE**

(57) According to embodiments, a method performed by a radio unit (RU) may comprise an operation of receiving configuration information for a remote interference management (RIM)-reference signal (RS) from a distributed unit (DU). The method may comprise an operation of receiving a message containing bit data for the RIM-RS from the DU. The method may comprise an operation of generating a complex-valued symbol corresponding to the bit data for the RIM-RS. The method may comprise an operation of generating a RIM-RS signal by performing at least one of phase rotation or phase difference compensation for the complex-valued symbol on the basis of the configuration information. The method may comprise an operation of generating a baseband signal corresponding to the RIM-RS signal on the basis of an inverse fast fourier transform (IFFT) and cyclic prefix (CP) insertion of the RU.

FIG. 10

EP 4 539 411 A1

**Description**

**[Technical Field]**

The present disclosure relates to a fronthaul interface. More specifically, the present disclosure relates to an electronic device and a method for providing a remote interference management-reference signal (RIM-RS) in a fronthaul interface.

**[Background Art]**

A time duplex division (TDD) communication system supports downlink and uplink communication between a base station and a terminal using different time resources. Since a signal transmitted by a cell located far from a cell is transmitted for a long time, it may be received during an uplink period of another cell beyond a guard period. In order to measure and manage such remote interference, the base station may transmit a remote interference management (RIM)-reference signal (RS).

The above-described information may be provided as a related art for the purpose of helping to understand the present disclosure. No claim or determination is raised as to whether any of the above-described information may be applied as a prior art related to the present disclosure.

**[Disclosure]**

**[Technical Solution]**

According to embodiments, a method performed by a radio unit (RU) may comprise receiving, from a distribute unit (DU), configuration information for remote interference management (RIM) - reference signal (RS). The method may comprise receiving, from the DU, a message including bit data for the RIM-RS. The method may comprise generating a complex-valued symbol corresponding to the bit data for the RIM-RS. The method may comprise generating a RIM-RS signal by performing at least one of a phase rotation or a phase difference compensation for the complex-valued symbol based on the configuration information. The method may comprise generating a baseband signal corresponding to the RIM-RS signal based on an inverse fast fourier transform (IFFT) and cyclic prefix (CP) insertion of the RU.

According to embodiments, an electronic device of a radio unit (RU) may comprise a fronthaul transceiver, at least one radio frequency (RF) transceiver, and at least one processor coupled to the fronthaul transceiver and the at least one RF transceiver. The at least one processor may be configured to receive, from a distribute unit (DU) through the fronthaul transceiver, configuration information for remote interference management (RIM) - reference signal (RS). The at least one processor may be configured to receive, from the DU through the fronthaul transceiver, a message including bit data for the RIM-RS. The at least one processor may be configured to generate a complex-valued symbol corresponding to the bit data for the RIM-RS. The at least one processor may be configured to generate a RIM-RS signal by performing at least one of a phase rotation or a phase difference compensation for the complex-valued symbol based on the configuration information. The at least one processor may be configured to generate a baseband signal corresponding to the RIM-RS signal based on an inverse fast fourier transform (IFFT) and cyclic prefix (CP) insertion of the RU.

According to embodiments, a method performed by a distributed unit (DU) may comprise transmitting, to a radio unit (RU), configuration information for remote interference management (RIM) - reference signal (RS). The method may comprise transmitting, to the RU, a message including bit data for the RIM-RS. The configuration information may be used for at least one of a phase rotation or a phase difference compensation for a complex-valued symbol to generate a baseband signal through inverse fast fourier transform (IFFT) and cyclic prefix (CP) insertion of the RU. The complex-valued symbol may correspond to a modulation result of the bit data for the RIM-RS.

According to embodiments, an electronic device of a distributed unit (DU) may comprise at least one transceiver including a fronthaul transceiver, and at least one processor coupled to the at least one transceiver. The at least one processor may be configured to transmit, to a radio unit (RU) through the fronthaul transceiver, configuration information for remote interference management (RIM) - reference signal (RS). The at least one processor may be configured to transmit, to the RU through the fronthaul transceiver, a message including bit data for the RIM-RS. The configuration information may be used for at least one of a phase rotation or a phase difference compensation for a complex-valued symbol to generate a baseband signal through inverse fast fourier transform (IFFT) and cyclic prefix (CP) insertion of the RU. The complex-valued symbol may correspond to a modulation result of the bit data for the RIM-RS.

According to embodiments, a non-transitory computer-readable storage medium is provided. The non-transitory computer-readable storage medium may store one or more programs. The one or more programs may comprise instructions which, when executed by a processor of a radio unit (RU), cause the RU to receive, from a distribute unit (DU), configuration information for remote interference management (RIM) - reference signal (RS). The one or more programs may comprise instructions which cause the RU to receive, from the DU, a message including bit data for the RIM-RS. The one or more programs may comprise instructions which cause the RU to generate a complex-valued symbol corresponding to the bit data for the RIM-RS. The one or more programs may comprise instructions which cause the RU to generate a RIM-RS signal by performing at least one of a phase rotation or a phase difference compensation for the complex-valued symbol based on the configuration information. The one or more programs may comprise instructions which cause the RU to generate a baseband signal corresponding to the RIM-RS signal based on an inverse fast fourier transform (IFFT) and cyclic prefix (CP) insertion of the RU.

According to embodiments, a non-transitory computer-readable storage medium is provided. The non-transitory computer-readable storage medium may store one or more programs. The one or more programs may comprise instructions which, when executed by a processor of a distributed unit (DU), cause the RU to transmit, to a radio unit (RU), configuration information for remote interference management (RIM) - reference signal (RS). The one or more programs may comprise instructions which cause the RU to transmitting, to the RU, a message including bit data for the RIM-RS. The configuration information may be used for at least one of a phase rotation or a phase difference compensation for a complex-valued symbol to generate a baseband signal through inverse fast fourier transform (IFFT) and cyclic prefix (CP) insertion of the RU. The complex-valued symbol may correspond to a modulation result of the bit data for the RIM-RS.

**[Description of the Drawings]**

FIG. 1 illustrates an example of remote interference, according to embodiments.
FIGS. 2A, 2B, and 2C illustrate examples of remote interference management according to embodiments.
FIG. 3A illustrates a fronthaul interface according to embodiments.
FIG. 3B illustrates a fronthaul interface of an open (O)-radio access network (RAN) according to embodiments.
FIG. 4A illustrates a functional configuration of a distributed unit (DU) according to embodiments.
FIG. 4B illustrates a functional configuration of a radio unit (RU) according to embodiments.
FIG. 5 illustrates an example of remote interference management (RIM)-reference signal (RS) structure according to embodiments.
FIG. 6 illustrates a functional configuration per network entity for compressed bit data transmission according to embodiments.
FIG. 7 illustrates an example of a cyclic shift according to embodiments.
FIG. 8 illustrates a functional configuration per network entity for downlink transmission.
FIG. 9A illustrates an example of a cyclic shifter according to embodiments.
FIG. 9B illustrates an example of a phase difference compensator according to embodiments.
FIG. 10 illustrates a functional configuration per network entity for RIM-RS transmission according to embodiments.
FIG. 11 illustrates an example of RIM-RS mapping according to embodiments.
FIG. 12 illustrates an operation flow of an RU for RIM-RS transmission according to embodiments.
FIG. 13 illustrates an operation flow of an RU for complex mapping of RIM-RS according to embodiments.
FIG. 14 illustrates an operation flow of an RU for phase rotation of RIM-RS according to embodiments.
FIG. 15 illustrates an operation flow of an RU for phase difference compensation of RIM-RS according to embodiments.
FIG. 16 illustrates an operation flow of a DU for RIM-RS transmission according to embodiments.

**[Mode for Invention]**

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

Terms referring to information (e.g., configuration information, additional information, control information), terms referring to operation state (e.g., step, operation, procedure), terms referring to data (e.g., information, value, command), terms referring to signal (e.g., packet, message, signal, information, signaling), terms referring to resource (e.g., section, symbol, slot, subframe, radio frame, subcarrier, resource element (RE), resource block (RB), bandwidth part (BWP), occasion), terms referring to operation state (e.g., step, operation, procedure), terms referring to data (e.g., packet, message, user stream, information, bit, symbol, codeword), terms referring to channel, terms referring to network entity (e.g., distributed unit (DU), radio unit (RU), central unit (CU), CU-control plane(CP), CU-user plane(UP), open radio access network (O-RAN) DU (O-DU), O-RAN RU (O-RU), O-RAN CU (O-CU), O-RAN CU-CP (O-CU-UP), O-RAN CU-CP (O-CU-CP)), and terms referring to components of a device, used in the following description are exemplified for convenience of explanation. Therefore, the present disclosure is not limited to terms to be described below, and another term having an equivalent technical meaning may be used. In addition, a term such as '...unit, '...device, '...material', and '...structure', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' refer to including at least one of 'C' or 'D', that is, {'C', 'D', and 'C' and 'D'}.

Although the present disclosure describes various embodiments using terms used in some communication standards (e.g., 3rd Generation Partnership Project (3GPP), extensible radio access network (xRAN), open-radio access network (O-RAN)), these are only examples for explanation. The various embodiments of the present disclosure may be easily modified and applied to other communication systems.

The present disclosure provides an electronic device and a method for providing a remote interference management (RIM)-reference signal (RS) on a fronthaul interface. In addition, the present disclosure provides an electronic device and a method for transmitting configuration information for RIM-RS to provide the RIM-RS through a lossless compression technique on the fronthaul interface. In addition, the present disclosure provides an electronic device and a method for performing complex mapping of modulation for the RIM-RS in a radio unit (RU) by transmitting configuration information for the RIM-RS to the RU on the fronthaul interface.

An electronic device and a method according to embodiments of the present disclosure may reduce the bandwidth of a fronthaul interface by providing RIM-RS through a lossless compression technique on a fronthaul interface.

An electronic device and a method according to embodiments of the present disclosure may transmit remote interference management (RIM)-reference signal (RIM-RS) based on existing hardware configurations through cyclic shift and phase difference compensation for the RIM-RS.

The effects that can be obtained from the present disclosure are not limited to those described above, and any other effects not mentioned herein will be clearly understood by those having ordinary knowledge in the art to which the present disclosure belongs, from the following description.

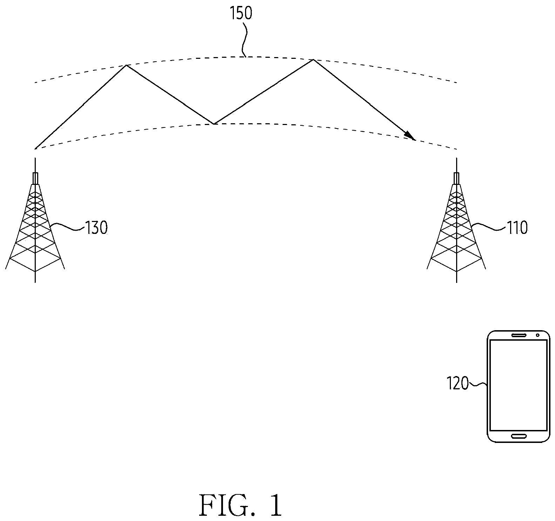

FIG. 1 illustrates an example of remote interference, according to embodiments.

Referring to FIG. 1, FIG. 1 illustrates a base station 110 and a terminal 120 as a portion of nodes that utilize a wireless channel in a wireless communication system. FIG. 1 illustrates only one base station, but a wireless communication system may further include another base station that is identical or similar to the base station 110.

The base station 110 is a network infrastructure that provides wireless access to the terminal 120. The base station 110 has coverage defined based on a distance at which a signal can be transmitted. The base station 110 may be referred to as an 'access point (AP)', 'eNodeB (eNB)', '5th generation node', 'next generation nodeB (gNB)', 'wireless point', 'transmission/reception point (TRP)' or other terms having equivalent technical meanings, in addition to the base station.

The terminal 120, which is a device used by a user, performs communication with the base station 110 through a wireless channel. A link from the base station 110 to the terminal 120 is referred to as a downlink (DL), and a link from the terminal 120 to the base station 110 is referred to as an uplink (UL). In addition, although not illustrated in FIG. 1, the terminal 120 and another terminal may perform communication through a wireless channel. At this time, a link between the terminal 120 and another terminal (device-to-device link (D2D)) is referred to as a sidelink, and the sidelink may be used interchangeably with a PC5 interface. In some other embodiments, the terminal 120 may be operated without the user's involvement. According to an embodiment, the terminal 120, which is a device that performs machine type communication (MTC), may not be carried by the user. Additionally, according to an embodiment, the terminal 120 may be a narrowband (NB)-internet of things (IoT) device.

In addition to the term terminal, the terminal 120 may also be referred to as user equipment (UE), customer premises equipment, (CPE), mobile station, subscriber station, remote terminal, wireless terminal, electronic device, user device, or other terms having equivalent technical meanings.

In a time duplex division (TDD) communication technique, a frequency domain in which the uplink channel and the downlink channel are the same may be used. At this time, downlink communication and uplink communication use different time resources because interference between channels occurs if downlink communication and uplink communication overlap in a time domain. A combination of time resources for TDD communication may be referred to as a TDD pattern. A downlink period of the TDD pattern may be set. The downlink period may be set based on at least one of one or more slots or one or more symbols. The downlink period may be set based on one or more slots. The downlink period may be set based on one or more symbols. The downlink period may be set based on one or more slots and one or more symbols. In addition, an uplink period of the TDD pattern may be set. The uplink period may be set based on at least one of one or more slots or one or more symbols. The uplink period may be set based on one or more slots. The uplink period may be set based on one or more symbols. The uplink period may be set based on one or more slots and one or more symbols.

In the TDD communication system, a flexible period of the TDD pattern may be operated for switching between the downlink period and the uplink period. The flexible period may also be referred to as a guard period. In general, the flexible period is set considering a propagation speed of a wireless signal and a typical path loss, but a propagation range of a wireless signal may increase under certain climatic conditions. For example, since a downlink signal 150 transmitted on a cell of a base station 130 located far from a base station 110 is transmitted for a long time, it may be received during an uplink period of another cell, beyond the guard period. The interference may be referred to as remote interference, time-of-flight (TOF) interference, long-distance cell interference, propagation delay interference, or self-interference. In the TDD communication system, the quality of uplink communication may be deteriorated by such remote interference.

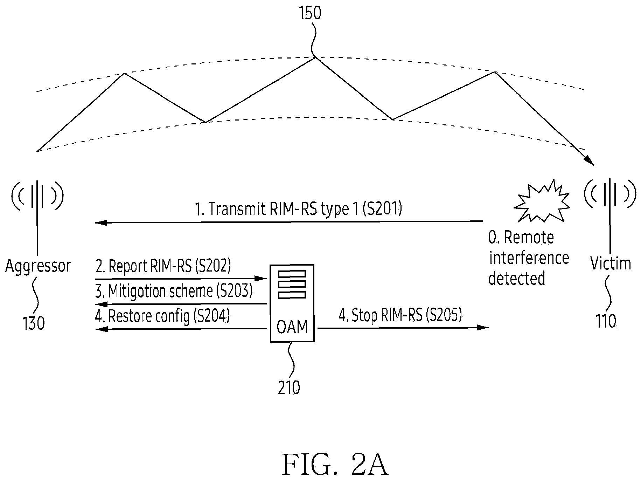

In case that the downlink signal 150 of the other base station 130 flows into the uplink transmission period of the base station 110, an uplink signal transmitted at a relatively low output may be vulnerable to interference (i.e., remote interference) due to the downlink signal 150. Therefore, a method for measuring the remote interference and controlling the remote interference is required. In the 5G NR system, a remote interference management-reference signal (RIM-RS) has been introduced to detect the above-described remote interference and control the interference. Hereinafter, examples of remote interference detection and interference control based on RIM-RS are described in FIGS. 2A to 2C.

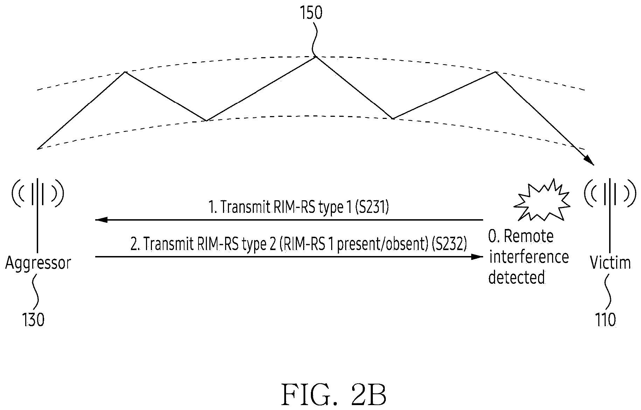

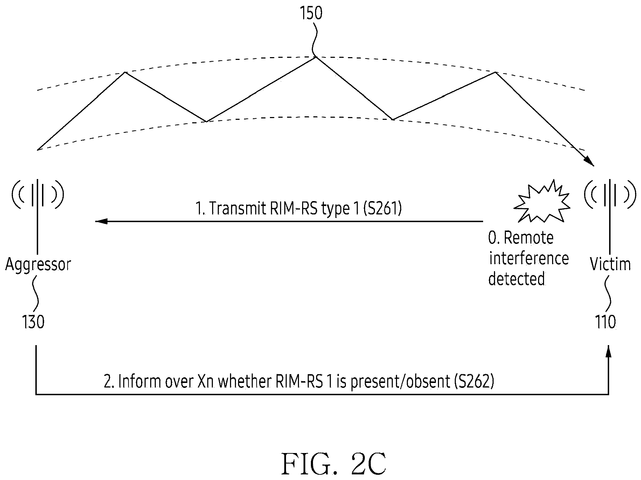

FIGS. 2A, 2B, and 2C illustrate examples of remote interference management according to embodiments. Through FIGS. 2A to 2C, frameworks for remote interference handling are described. A difference between the frameworks is a location of a decision to apply interference mitigation in the network, and a way of delivering the decision between nodes. Hereinafter, three frameworks are exemplified, but other framework variations may be easily considered, and artificial intelligence and machine learning may be used for the framework.

Referring to FIG. 2A, an operation and management (OAM) device 210 may perform all decisions related to remote interference mitigation in a centralized remote interference management framework. If remote interference is detected, the base station 110, which is a victim node, may transmit a first type of RIM-RS (S201). The first type corresponds to RIM-RS type 1 of 3GPP. The first type of RIM-RS may not only indicate that a cell is experiencing remote interference, but may also include information on the ID of a node (or group of nodes) transmitting a reference signal and the number of orthogonal frequency division multiplexing (OFDM) symbols in the affected uplink period. The information may be implicitly encoded in the RIM-RS. Since the atmosphere duct is reciprocal, the base station 130 providing an attacker cell contributing to the remote interference of the victim may receive the RIM-RS.

Upon receiving the RIM-RS, the base station 130, which is an attacker node, may report the detected RIM-RS to the OAM device 210 (S202). For further determination on how to resolve the interference problem, the base station 130 may transmit the detected RIM-RS, which includes information encoded in the RIM-RS, to the OAM device 210. The OAM device 210 may transmit a command indicating a change in the TDD pattern to the base station 130 (S203). The OAM device 210 may take a decision on a suitable mitigation scheme, which requests the attacker cell to stop downlink transmission earlier in order to extend the guard period. Thereafter, if the ducting phenomenon disappears, the base station 130 no longer detects the RIM-RS. The base station 130 may transmit a report on interference elimination to the OAM device 210. The OAM device 210 may command the base station 110 to stop the RIM-RS transmission (S205). In addition, the OAM device 210 may request the base station 130 to restore the previous configuration of the TDD pattern (S204). The operation S204 may be performed independently of the operation S205.

Referring to FIG. 2B, if remote interference is detected, the base station 110, which is a victim node, may transmit a first type RIM-RS (S231). When the base station 130, which is an attacker node, receives the first type RIM-RS, the base station 130 may identify that the base station 110 is experiencing remote interference. The base station 130 may transmit a second type RIM-RS to the base station 110 (S233). The second type corresponds to RIM-RS type 2 of 3GPP. The base station 130 may transmit, to the base station 110, a radio signal to notify that it has received the first type RIM-RS and applied a suitable mitigation plan. The base station 110 receiving the second type of RIM-RS may detect whether remote interference exists. If the base station 110 does not detect the second type of RIM-RS, the base station 110 may identify the disappearance of remote interference. The base station 110 may stop transmitting the first type of RIM-RS. Thereafter, the base station 130, which is an attacker node, may restore the pattern configuration before interference detection, based on identifying that the first type of RIM-RS is no longer received.

Referring to FIG. 2C, if remote interference is detected, the base station 110, which is a victim node, may transmit the first type RIM-RS (S231). When the base station 130, which is an attacker node, receives the first type RIM-RS, the base station 130 may identify that the base station 110 is experiencing remote interference. The base station 130 may transmit a backhaul signal to the base station 110 through an Xn interface (S233). The backhaul signal through the Xn interface may be used to inform the base station 110 of the presence or absence of the first type RIM-RS from the base station 130. The backhaul signal indicating the absence of the first type RIM-RS may be used to determine that remote interference no longer exists and to stop transmission of the first type RIM-RS. The base station 130, which is an attacker node, may restore the pattern configuration before interference detection, based on identifying that the first type RIM-RS is no longer received.

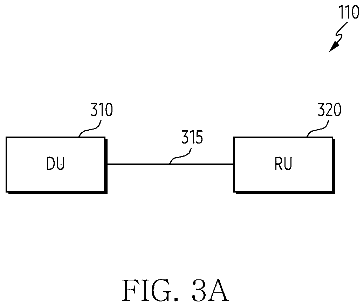

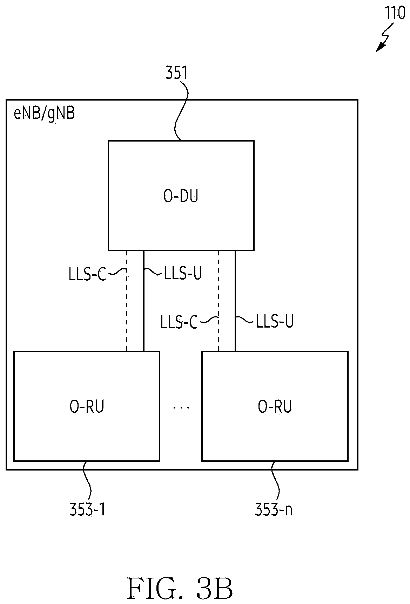

In the past, in communication systems with relatively large cell radius of base stations, each base station was installed to include functions of a digital processing unit (or distributed unit (DU)) and a radio frequency (RF) processing unit (or radio unit (RU)). However, as high frequency bands are used in 4th generation (4G) and/or subsequent communication systems (e.g., 5G) and the cell coverage of base stations becomes smaller, the number of base stations to cover a specific area has increased. The installation cost burden of operators for installing base stations has also increased. In order to minimize the installation cost of a base station, a structure has been proposed in which the DU and RU of the base station are separated, one or more RUs are connected to one DU through a wired network, and one or more RUs are geographically distributed to cover a specific area. Hereinafter, a deployment structure and expansion examples of a base station according to various embodiments of the present disclosure are described through FIGS. 3A and 3B.

FIG. 3A illustrates a fronthaul interface according to embodiments. The fronthaul refers to an interface between entities between a radio access network and a base station, unlike backhaul between a base station and a core network. In FIG. 3a, an example of a fronthaul structure between one DU 310 and one RU 320 is illustrated, but this is only for convenience of explanation and the present disclosure is not limited thereto. In other words, the embodiments of the present disclosure may also be applied to a fronthaul structure between one DU and a plurality of RU. For example, the embodiments of the present disclosure may be applied to a fronthaul structure between one DU and two RU. In addition, the embodiments of the present disclosure may also be applied to a fronthaul structure between one DU and three RU.

Referring to FIG. 3A, the base station 110 may include a DU 310 and a RU 320. A fronthaul 315 between the DU 310 and the RU 320 may be operated via an Fx interface. For example, for operating the fronthaul 315, an interface such as an enhanced common public radio interface (eCPRI) or radio over ethernet (ROE) may be used.

As communication technology has been developed, mobile data traffic increases, and thus the bandwidth demand required in the fronthaul between the digital unit and the radio unit has increased significantly. In a deployment such as centralized/cloud radio access network (C-RAN), the DU may be implemented to perform functions for packet data convergence protocol (PDCP), radio link control (RLC), media access control (MAC), and physical (PHY), and RU may be implemented to further perform functions for PHY layer in addition to radio frequency (RF) functions.

The DU 310 may be in charge of upper layer functions of a wireless network. For example, the DU 310 may perform functions of MAC layer and a part of PHY layer. Herein, a part of the PHY layer refers to a function of the PHY layer performed at a higher level among the functions of the PHY layer, and may include, for example, channel encoding (or channel decoding), scrambling (or descrambling), modulation (or demodulation), and layer mapping (or layer demapping). According to an embodiment, the DU 310 may perform only bit arrangement for resource mapping during among modulation operations. Bit arrangement means an operation of distinguishing bits into symbol units according to the modulation order, in order to map bits to REs. Subsequently, among the modulation operation, complex mapping converting bits into complex-valued symbols may be performed by the RU 320. In addition, according to an embodiment, if the DU 310 complies with the O-RAN standard, it may be referred to as an O-DU (O-RAN DU). The DU 310 may be replaced with a first network entity for a base station (e.g., gNB) in embodiments of the present disclosure, if necessary.

The RU 320 may be in charge of lower layer functions of a wireless network. For example, the RU 320 may perform a part of the PHY layer, and RF function. Herein, a part of the PHY layer refers to a function of the PHY layer performed at performed at a relatively lower level than the DU 310, and may include, for example, iFFT conversion (or FFT conversion), CP insertion (CP removal), and digital beamforming. According to an embodiment, the RU 320 may perform complex mapping among modulation operations. The complex mapping means an operation of converting bits corresponding to symbols into in-phase/quadrature-phase (IQ) signals. The RU 320 may be referred to as access unit (AU), access point (AP), transmission/reception point (TRP), remote radio head (RRH), radio unit (RU), or other terms having equivalent technical meanings. According to an embodiment, if the RU 320 complies with the O-RAN standard, it may be referred to as O-RAN RU (O-RU). The RU 320 may be replaced with a second network entity for a base station (e.g., gNB) in embodiments of the present disclosure, if necessary.

Although FIG. 3A describes that the base station 110 includes the DU 310 and the RU 320, the embodiments of the present disclosure are not limited thereto. The base station according to the embodiments may be implemented in a distributed deployment according to a centralized unit (CU) configured to perform functions of upper layers (e.g., packet data convergence protocol (PDCP), radio resource control (RRC)) of an access network and a distributed unit (DU) configured to perform functions of lower layers. At this time, the distributed unit (DU) may include the digital unit (DU) and the radio unit (RU) of FIG. 1. Between a core (e.g., 5G core (5GC) or next generation core (NGC)) network and a radio network (RAN), the base station may be implemented in a structure in which CU, DU, and RU are arranged in order. An interface between the CU and the distributed unit (DU) may be referred to as an F1 interface.

A centralized unit (CU) may be connected to one or more DUs to perform a function of a higher layer than the DU. For example, the CU may be in charge of radio resource control (RRC) and a function of a packet data convergence protocol (PDCP) layer, and the DU and the RU may be in charge of functions of lower layers. The DU may perform radio link control (RLC), media access control (MAC), and some functions (high PHY) of PHY layer, and the RU may perform remaining functions (low PHY) of the PHY layer. In addition, as an example, a digital unit (DU) may be included in a distributed unit (DU) according to the implementation of distributed deployment of the base station. Hereinafter, unless otherwise defined, it is described that operations of the digital unit (DU) and the RU, but various embodiments of the present disclosure may be applied to both of a base station arrangement including the CU or an arrangement where the DU is directly connected to a core network (i.e., the CU and the DU are integrated into a base station (e.g., NG-RAN node) which is a single entity).

FIG. 3B illustrates a fronthaul interface of an open (O)-radio access network (RAN) according to embodiments. As a base station 110 according to distributed deployment, eNB or gNB is exemplified.

Referring to FIG. 3B, the base station 110 may include an O-DU 351 and O-RUs 353-1, ..., and 353-n. Hereinafter, for convenience of explanation, an operation and a function of the O-RU 353-1 may be understood as a description of each of other O-RUs (e.g., O-RU 353-n).

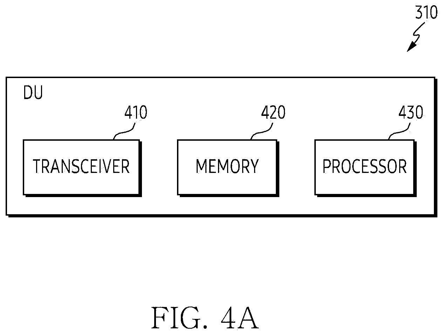

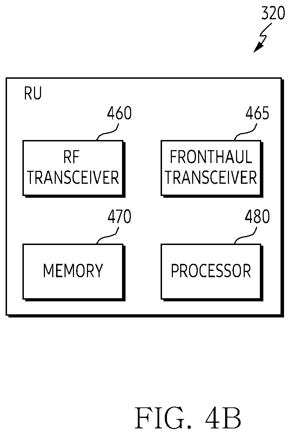

The O-DU 351 is a logical node including functions among function of a base station (e.g., eNB, gNB) according to FIG. 4 to be described later, except for functions allocated exclusively to the O-RU 353-1. The O-DU 351 may control operations of the O-RUs 353-1, ..., and 353-n. The O-DU 351 may be referred to as a lower layer split (LLS) central unit (CU). The O-RU 353-1 is a logical node including a subset among the functions of a base station (e.g., eNB, gNB) according to FIG. 4 to be described later. The real-time aspect of the control plane (C-plane) communication and user plane (U-plane) communication with the O-RU 353-1 may be controlled by the O-DU 351.

The O-DU 351 may perform communication with the O-RU 353-1 through an LLS interface. The LLS interface corresponds to a fronthaul interface. The LLS interface refers to a logical interface between the O-DU 351 and the O-RU 353-1 using lower layer functional split (i.e., intra-PHY-based functional split). The LLS-C between the O-DU 351 and the O-RU 353-1 provides the C-plane through the LLS interface. The LLS-U between the O-DU 351 and the O-RU 353-1 provides the U-plane through the LLS interface.

In FIG. 3B, entities of the base station 110 have been described as O-DU and O-RU to describe O-RAN. However, these designations are not to be construed as limiting the embodiments of the present disclosure. In embodiments described with reference to FIGS. 3A to 16, operations of the DU 310 may also be performed by the O-DU 351. A description of the DU 310 may be applied to the O-DU 351. Likewise, in embodiments described with reference to FIGS. 4A to 16, operations of the RU 320 may also be performed by the O-RU 353-1. A description of the RU 320 may be applied to the O-RU 353-1.

FIG. 4A illustrates a functional configuration of a distributed unit (DU) according to embodiments. A configuration exemplified in FIG. 4A may be understood as a configuration of the DU 310 of FIG. 3A (or the O-DU 351 of FIG. 3B) as a part of a base station. Hereinafter, the terms '...unit' and '...er' used below refer to a unit processing at least one function or operation, which may be implemented by hardware or software, or a combination of hardware and software.

Referring to FIG. 4A, a DU 310 includes a transceiver 410, memory 420, and a processor 430.

The transceiver 410 may perform functions for transmitting and receiving a signal in a wired communication environment. The transceiver 410 may include a wired interface for controlling a direct connection between a device and a device through a transmission medium (e.g., copper wire, optical fiber). For example, the transceiver 410 may transmit an electrical signal to another device through a copper wire or perform conversion between an electrical signal and an optical signal. The DU 310 may communicate with a radio unit (RU) through the transceiver 410. The DU 310 may be connected to a core network or a CU of a distributed deployment through the transceiver 410.

The transceiver 410 may perform functions for transmitting and receiving a signal in a wireless communication environment. For example, the transceiver 410 may perform a conversion function between a baseband signal and a bit string according to a physical layer specification of a system. For example, upon transmitting data, the transceiver 410 generates complex-valued symbols by encoding and modulating a transmission bit string. In addition, upon receiving data, the transceiver 410 restores a received bit string by demodulating and decoding a baseband signal. In addition, the transceiver 410 may include a plurality of transmission/reception paths. In addition, according to an embodiment, the transceiver 410 may be connected to a core network or to other nodes (e.g., integrated access backhaul (IAB)).

The transceiver 410 may transmit and receive a signal. For example, the transceiver 410 may transmit a management plane (M-plane) message. For example, the transceiver 410 may transmit a synchronization plane (S-plane) message. For example, the transceiver 410 may transmit a control plane (C-plane) message. For example, the transceiver 410 may transmit a user plane (U-plane) message. For example, the transceiver 410 may receive the U-plane message. Although only the transceiver 410 is illustrated in FIG. 4A, the DU 310 may include two or more transceivers according to another implementation.

The transceiver 410 transmits and receives a signal as described above. Accordingly, all or some of the transceiver 410 may be referred to as a 'communication unit', a 'transmission unit', a 'reception unit', or a 'transmission/reception unit'. In addition, in the following description, transmission and reception performed through a wireless channel are used to include the processing as described above being performed by the transceiver 410.

Although not illustrated in FIG. 4A, the transceiver 410 may further include a backhaul transceiver for connection with a core network or another base station. The backhaul transceiver provides an interface for performing communication with other nodes in the network. In other words, the backhaul transceiver converts a bit string transmitted from a base station to another node, such as another access node, another base station, an upper node, and a core network into a physical signal, and converts a physical signal received from another node into a bit string.

The memory 420 stores a basic program, an application program, and data such as configuration information for an operation of the DU 310. The memory 420 may be referred to as a storage unit. The memory 420 may be configured with a volatile memory, a nonvolatile memory, or a combination of the volatile memory and the nonvolatile memory. Further, the memory 420 provides stored data according to a request from the processor 430.

The processor 430 controls overall operations of the DU 310. The processor 480 may be referred to as a control unit. For example, the processor 430 transmits and receives a signal through the transceiver 410 (or through a backhaul communication unit). In addition, the processor 430 writes and reads data in the memory 420. In addition, the processor 430 may perform functions of a protocol stack required in a communication standard. Although only the processor 430 is illustrated in FIG. 4A, the DU 310 may include two or more processors according to another implementation.

A configuration of the DU 310 illustrated in FIG. 4A is only an example, and the example of the DU performing the embodiments of the present disclosure is not limited to the configuration illustrated in FIG. 4A. In some embodiment, some configurations may be added, deleted, or changed.

FIG. 4B illustrates a functional configuration of a radio unit (RU) according to embodiments. A configuration illustrated in FIG. 4B may be understood as a configuration of the RU 320 of FIG. 3A or the O-RU 353-1 of FIG. 3B as a part of a base station. Hereinafter, the terms '...unit' and '...er' used below refer to a unit processing at least one function or operation, which may be implemented by hardware or software, or a combination of hardware and software.

Referring to FIG. 4B, the RU 320 includes an RF transceiver 460, a fronthaul transceiver 465, memory 470, and a processor 480.

The RF transceiver 460 performs functions for transmitting and receiving a signal through a wireless channel. For example, the RF transceiver 460 up-converts a baseband signal into an RF band signal and then transmits it through an antenna, and down-converts an RF band signal received through the antenna into a baseband signal. For example, the RF transceiver 460 may include a transmission filter, a reception filter, an amplifier, a mixer, an oscillator, a DAC, an ADC.

The RF transceiver 460 may include a plurality of transmission/reception paths. Furthermore, the RF transceiver 460 may include an antenna unit. The RF transceiver 460 may include at least one antenna array composed of a plurality of antenna elements. In terms of hardware, the RF transceiver 460 may be composed of a digital circuit and an analog circuit (e.g., a radio frequency integrated circuit (RFIC)). Herein, the digital circuit and the analog circuit may be implemented as a single package. In addition, the RF transceiver 460 may include a plurality of RF chains. The RF transceiver 460 may perform beamforming. In order to provide directionality to a signal to be transmitted and received according to the setting of the processor 480, the RF transceiver 460 may apply beamforming weights to the signal. According to an embodiment, the RF transceiver 460 may include a radio frequency (RF) block (or RF unit).

The RF transceiver 460 may transmit and receive a signal on a radio access network. For example, the RF transceiver 460 may transmit a downlink signal. The downlink signal may include synchronization signal (SS), reference signal (RS) (e.g., cell-specific reference signal (CRS), demodulation (DM)-RS), system information (e.g., MIB, SIB, remaining system information (RMSI), other system information (OSI)), configuration message, control information or downlink data. In addition, for example, the RF transceiver 460 may receive an uplink signal. The uplink signal may include a random access-related signal (e.g., random access preamble (RAP)) (or message 1 (Msg1), message 3 (Msg3)), a reference signal (e.g., sounding reference signal (SRS), DM-RS), or a power headroom report (PHR). Although only the RF transceiver 460 is illustrated in FIG. 4B, the RU 320 may include two or more RF transceivers according to another implementation.

According to embodiments, the RF transceiver 460 may transmit an RIM-RS. The RF transceiver 460 may transmit a first type of RIM-RS (e.g., RIM-RS type 1 of 3GPP) to inform the detection of remote interference. The RF transceiver 460 may transmit a second type of RIM-RS (e.g., RIM-RS type 2 of 3GPP) to inform the presence or absence of remote interference.

The fronthaul transceiver 465 may transmit and receive a signal. According to an embodiment, the fronthaul transceiver 465 may transmit and receive a signal on a fronthaul interface. For example, the fronthaul transceiver 465 may receive a management plane (M-plane) message. For example, the fronthaul transceiver 465 may receive a synchronization plane (S-plane) message. For example, the fronthaul transceiver 465 may receive a control plane (C-plane) message. For example, the fronthaul transceiver 465 may transmit a user plane (U-plane) message. For example, the fronthaul transceiver 465 may receive a U-plane message. Although only the fronthaul transceiver 465 is illustrated In FIG. 4B, the RU 320 may include two or more fronthaul transceivers according to another implementation.

As described above, the RF transceiver 460 and the fronthaul transceiver 465 transmit and receive a signal. Accordingly, all or some of the RF transceiver 460 and the fronthaul transceiver 465 may be referred to as a 'communication unit', a 'transmission unit', a 'reception unit', or a 'transmission/reception unit'. Furthermore, in the following description, transmission and reception performed through a wireless channel are used to include the processing as described above being performed by the RF transceiver 460. In the following description, transmission and reception performed through a wireless channel are used to include the processing as described above being performed by the RF transceiver 460.

The memory 470 stores a basic program, an application program, and data such as configuration information for an operation of the RU 320. The memory 470 may be referred to as a storage unit. The memory 470 may be configured with a volatile memory, a nonvolatile memory, or a combination of the volatile memory and the nonvolatile memory. Further, the memory 470 provides stored data according to a request from the processor 480. According to an embodiment, the memory 470 may include a memory for a condition, a command, or a setting value related to an SRS transmission scheme.

The processor 480 controls overall operations of the RU 320. The processor 480 may be referred to as a control unit. For example, the processor 480 transmits and receives a signal through the RF transceiver 460 or the fronthaul transceiver 465. In addition, the processor 480 writes and reads data in the memory 470. In addition, the processor 480 may perform functions of a protocol stack required by a communication standard. Although only processor 480 is illustrated in FIG. 4B, the RU 320 may include two or more processors according to another implementation. The processor 480, which is an instruction set or code stored in the memory 470, may be an instruction/code at least temporarily resided in the processor 480 or a storage space storing instruction/code, or part of circuitry constituting the processor 480. In addition, the processor 480 may include various modules for performing communication. The processor 480 may control the RU 320 to perform operations according to embodiments to be described later.

A configuration of the RU 320 illustrated in FIG. 4B is only an example, and the example of the RU performing the embodiments of the present disclosure is not limited to the configuration illustrated in FIG. 4B. In some embodiment, some configurations may be added, deleted, or changed.

As described above, in order to manage remote interference, a base station may transmit RIM-RS. A victim node may transmit the first type of RIM-RS (e.g., RIM-RS type 1 of 3GPP). The first type of RIM-RS may be used to indicate that remote interference exists in a victim cell, that is, to inform that there is a ducting phenomenon. In a specific framework (e.g., framework of FIG. 2B), an attacker node may transmit a second type of RIM-RS (e.g., RIM-RS type 2 of 3GPP). The second type of RIM-RS may be used to inform the victim cell that there is a ducting phenomenon. Unlike the first type of RIM-RS, the second type of RIM-RS may not transmit additional information (e.g., the number of symbols). Hereinafter, the description of the RIM-RS structure described below may be applied to the first type of RIM-RS and the second type of RIM-RS.

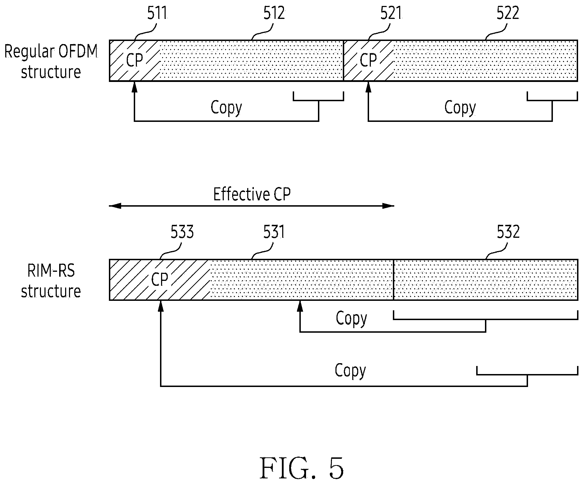

FIG. 5 illustrates an example of remote interference management (RIM)-reference signal (RS) structure according to embodiments. The RIM-RS is intended to inform remote interference, and an RIM-RS structure is required to be able to detect the RIM-RS without OFDM symbol synchronization between the attacker and the victim.

Referring to FIG. 5, a structure of a regular OFDM symbol may include a data symbol and a cyclic prefix (CP). Herein, the general OFDM symbol means a symbol used to transmit bits of other NR channels (e.g., physical downlink shared channel (PDSCH), physical downlink control channel (PDCCH), physical uplink shared channel (PUSCH), physical uplink control channel (PUCCH)) except for RIM-RS. The data symbol means a complex number symbol corresponding to data payload, and on which complex mapping has been performed. For example, a first OFDM symbol may include a CP 511 and a data symbol 512. The CP 511 corresponds to one or more samples of the data symbol 512. The symbol 512 refers to a complex number symbol on which complex mapping is performed. The second OFDM symbol may include a CP 521 and a data symbol 522. The CP 521 corresponds to one or more samples of the data symbol 522.

The RIM-RS may be transmitted through two consecutive symbols. The two consecutive symbols may include a first RIM-RS symbol 531 and a second RIM-RS symbol 532. Herein, the symbol means a complex-valued symbol corresponding to bits, not a resource length including the CP. Useful parts of each symbol may be the same. The useful part refers to data payload. The data symbol of the first RIM-RS symbol 531 and the data symbol of the second RIM-RS symbol 532 may be the same. Unlike a transmission structure of a general OFDM symbol, in the RIM-RS, the CP is not located in front of each symbol, but the RIM-RS CP 533 may be located at a front end of the first symbol 531 located in front among the two symbols. Copied samples used for the RIM-RS CP 533 are located at an end portion of the second symbol of the RIM-RS. Since a length of the CP is relatively long, it is possible to detect the RIM-RS without estimating a separate OFDM symbol timing.

In the 5G wireless communication system, for large-capacity data transmission, the bandwidth of radio channels and the number of antennas increase, and the interface bandwidth between the DU and the RU also increase significantly. In addition, since one DU should transmit traffic to a plurality of RUs, the required interface bandwidth between the DU and RU increases linearly with respect to the number of RUs. In a general functional split system, in order to reduce the required interface bandwidth between the DU and the RU, the DU generates a signal of a frequency domain and generates a signal of a time domain through inverse fast fourier transform and CP insertion in the RU. In the OFDM systems, a guard subcarrier is inserted to reduce channel interference. If only the signal of the frequency domain, from which the guard subcarrier is excluded, is transmitted, the required bandwidth between the DU and RU may be reduced. Together with the function split in which the DU processes a signal in the frequency domain and the RU processes a signal in the time domain, various compression scheme to reduce the required bandwidth by compressing traffic between DU and RU have been proposed. These traffic compression techniques may be classified into a loss compression technique and a lossless compression technique.

The loss compression technique is a method in which after modulation is performed in the DU, a complex-valued symbol with a channel gain applied is generated, low-critical lower bit information is removed, and remaining bits are transmitted to the RU. For example, it is assumed that the lower 8 bits are removed from 16 bits, and remaining top 8 bits are transmitted to the RU. The required bandwidth between the DU and the RU may be reduced by 50%. However, in the RU, the symbol should be restored only with the upper 8-bit information. The loss compression technique has the disadvantage of causing information distortion between the DU and the RU.

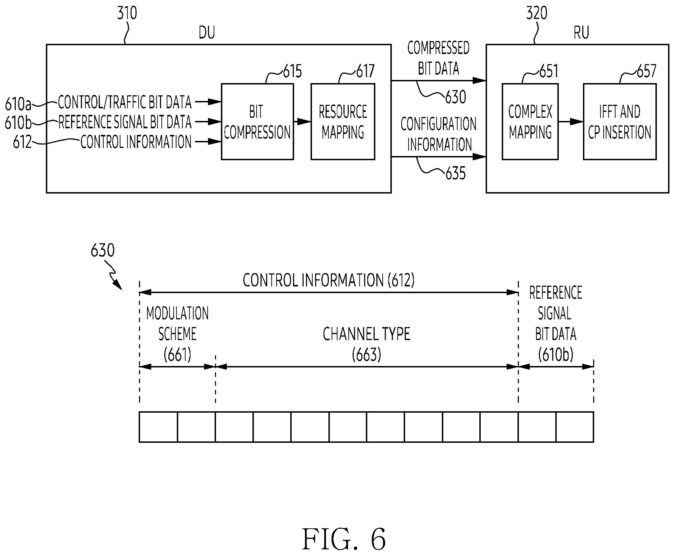

The lossless compression technique is divided into a method in which a complex-valued symbol is generated in the DU and data (hereinafter, compressed bit data) to which lossless compression based on information theory is applied to the complex-valued symbol is transmitted to the RU, and a method in which bit data is transmitted in the DU to the RU and the RU generates a complex-valued symbol by reflecting modulation and channel gain. The lossless compression based on information theory has the disadvantage of being difficult to process large amounts of data in real time because it requires a lot of computation for compression and restoration. In the lossless compression in which the RU performs modulation using compressed bit data received from the DU, the modulation function of the DU is transferred to the RU. In terms of the system, the required bandwidth between the DU and the RU may be efficiently reduced without an additional increase in computational complexity. In order for the RU to perform modulation (it means that a process of generating an IQ signal through complex mapping) and reflect the channel gain, additional control information (modulation method, channel type) is required. The DU may transmit control information to the RU together with bit data. The compressed data transferred from the DU to the RU may include bit data and control information. For example, the DU may compress bit data and control information into 10 bits. The DU may transmit compressed bit data of 10 bits to the RU. The RU may perform complex mapping of modulation, based on the compressed bit data. Herein, the complex mapping means an operation of converting bits corresponding to one symbol into an IQ signal. Through complex mapping of modulation, the RU may generate a 16-bit complex-valued symbol, that is, a complex-valued symbol with a real part of 16-bit and an imaginary part of 16-bit. Accordingly, the RU may reduce the required bandwidth between the DU and the RU to 31.25% (=10/32) compared to the uncompressed one. Hereinafter, functions of the lossless compression technique between the DU and the RU will be described with reference to FIG. 6.

FIG. 6 illustrates a functional configuration per network entity for compressed bit data transmission according to embodiments. The network entity may include a DU 310 or an RU 320.

Referring to FIG. 6, the DU 310 may obtain bit data corresponding to information to be transmitted by the RU 320. The DU 310 may obtain bit data by receiving bits from an upper node or generating a signal at the DU 310. According to an embodiment, the DU 310 may obtain control/traffic bit data 610a. The control/traffic bit data 610a may include at least one of control bit data and traffic bit data. Herein, the control bit data may include one or more bits related to a control channel (e.g., physical downlink control channel (PDCCH)). The traffic bit data may include one or more bits related to a data channel (e.g., physical downlink shared channel (PDSCH)). According to an embodiment, the DU 310 may obtain reference signal bit data 610b. According to an embodiment, reference signal bit data may include one or more bits corresponding to the RIM-RS.

The DU 310 may generate control information 612. The DU 310 may generate control information 612 related to bit data. The control information 612 may generate control information 612 for the control bit data 610a, the traffic bit data 610a, or the reference signal bit data 610b. The control information 612 may indicate a channel type of bit data and a modulation method for bit data.

The DU 310 may perform bit compression 615, based on at least one of the control/traffic bit data 610a, the reference signal bit data 610b, or the control information 612. The DU 310 may generate compressed bit data 630 including the control information 612 in addition to the control/traffic bit data 610a or the reference signal bit data 610b. The DU 310 may perform resource mapping 617 on the generated compressed bit data 630. The DU 310 may sort bits of compressed bit data. In the present disclosure, modulation may include bit alignment and complex mapping 651. Herein, the bit alignment refers to an operation of distinguishing bits by a size of symbol units (e.g., QPSK is 2-bit and 16 QAM is 4-bit) corresponding to a modulation order to map bits to the RE. The complex mapping 651 refers to an operation of converting bits aligned to correspond to one symbol into an IQ signal. The converted IQ signal may be referred to as a complex-valued symbol. The DU 310 may perform bit alignment with respect to compressed bit data. The DU 310 maps bits corresponding to one symbol to a resource element (RE), which is a frequency-time resource, and transmits the bits to the RU 320. For example, in case that the modulation scheme is QPSK, the DU 310 may map two bits to one RE.

The DU 310 may transmit the generated compressed bit data 630 to the RU 320. The DU 310 may transmit the generated compressed bit data 630 to the RU 320 through a fronthaul interface. The DU 310 may transmit configuration information 635 to the RU 320. The configuration information 635 may include information used for signal processing in the RU 320. The configuration information 635 may include information on a gain for each channel. The configuration information 635 may include information on precoding (e.g., a precoding matrix). In addition, the configuration information 635 may include a channel-specific gain, a precoding matrix, and other additional information. The configuration information 635 may be transmitted only once for a first time or may be updated as necessary. Accordingly, the transmission frequency of the configuration information 635 may be lower than that of the compressed bit data 630. Transmission of the configuration information 635 may be performed with a bandwidth lower than that of the compressed bit data 630. The RU 320 may obtain a modulation scheme 661 and a channel type 663 based on the control information 612 of the compressed bit data 630.

The RU 320 may perform complex mapping 651. The RU 320 may generate an IQ signal corresponding to the bit data 630. The RU 320 may generate a complex-valued symbol corresponding to the bit data 630, based on the modulation scheme 661 and the channel type 663. The RU 320 may perform IFFT and CP insertion 657. The RU 320 may apply the obtained channel gain and precoding matrix to the generated complex-valued symbol, based on the configuration information 635. The RU 320 may generate a RIM-RS symbol based on an inverse fast fourier transform (IFFT) to be applied to the modulated complex-valued symbol, and may generate an OFDM baseband signal by inserting a cyclic prefix (CP). The baseband signal may be a time domain signal.

The RIM-RS according to embodiments corresponds to a reference signal. The RIM-RS may be generated based on bit data of 2-bit. The RIM-RS may be generated based on Quadrature Phase Shift Keying (QPSK). In the lossless compression scheme of FIG. 6, the DU 310 may transmit 2 bits of reference signal bit data 610b related to the RIM-RS to the RU 320. The RU 320 may perform the QPSK modulation on 2 bits, based on the control information 612. Herein, bit alignment for RE mapping may be performed by the DU 310. The RU 320 may generate a complex-valued symbol for the RIM-RS based on a channel gain obtained through the configuration information 635. The compressed bit data 630 transmitted from the DU 310 to the RU 320 may include bit data (e.g., reference signal bit data 610b) and the control information 612. For example, the number of bits of the compressed bit data 630 may be 10. An index for the modulation scheme 661 and an index for the channel type 663 may be determined by a predefined setting (e.g., pre-setting an M-plane of an O-RAN) between the DU 310 and the RU 320. As an example, the index '00' of the modulation scheme 661 may mean the QPSK modulation. The index '101100' of the channel type 663 may indicate the RIM-RS.

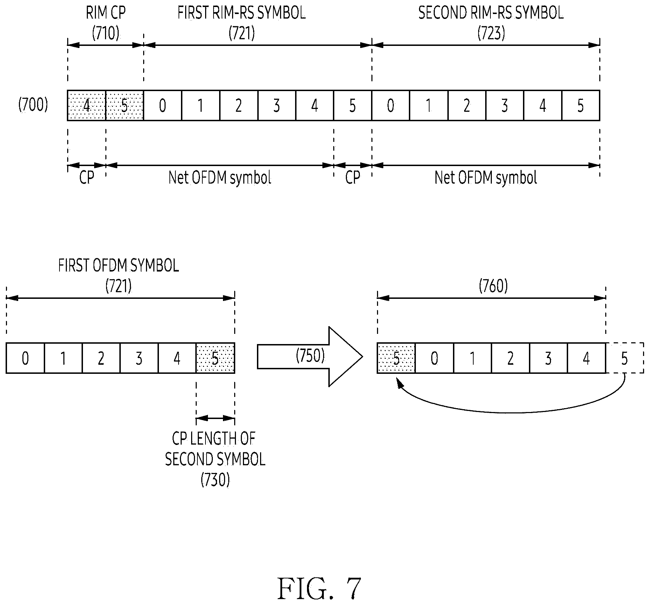

FIG. 7 illustrates an example of a cyclic shift according to embodiments. As mentioned in FIG. 5, for detecting the RIM-RS, it has been standardized to connect two identical data symbols and use a cyclic prefix (CP) longer than that of a general OFDM symbol. A CP inserter of RU's hardware developed before RIM-RS standardization may only add one CP to one OFDM symbol. Therefore, in order to generate an OFDM symbol of the RIM-RS in which the first data symbol and the second data symbol are connected through the existing CP inserter, an additional process is required. The additional process may be referred to as cyclic shift.

Referring to FIG. 7, the RIM-RS 700 may include a RIM-RS CP 710, a first RIM-RS symbol 721, and a second RIM-RS symbol 723. For example, the first RIM-RS symbol 721 may include six sample groups. Each sample group may include one or more time samples. The first RIM-RS symbol 721 may include sample group #0, sample group #1, sample group #2, sample group #3, sample group #4, and sample group #5. The second RIM-RS symbol 723 may include six sample groups. The second RIM-RS symbol 723 may include sample group #0, sample group #1, sample group #2, sample group #3, sample group #4, and sample group #5. The sample groups of the second RIM-RS symbol 723 may be identical to the sample groups of the first RIM-RS symbol 721. The RIM-RS CP 710 may be configured to be longer than the CP length of a general OFDM symbol. For example, the RIM-RS CP 710 may include some sample groups (e.g., sample groups #4, #5) among the sample groups of the second RIM-RS symbol 723.

The CP inserter for the general OFDM symbol inserts one sample group of the data symbol in front. Herein, the general OFDM symbol means a symbol used to transfer bits of other NR channels (e.g., PDSCH, PDCCH, PUSCH, PUCCH) except for RIM-RS. The data symbol means a complex-valued symbol corresponding to the data payload and on which complex mapping has been performed. In order to implement the RIM-RS CP 710 through the CP inserter for the general OFDM symbol, a cyclic shift is required before CP insertion.

The RU may perform a cyclic shift 750 on a portion of a data symbol. For example, the cyclic shift may be performed on the sample group #5, which is located at the end among the six sample groups of the first data symbol 721. When assuming the general OFDM symbol, a length of the sample group #5 may correspond to a CP length of the second data symbol 723. After cyclically shifting the first data symbol 721 of the RIM-RS backward as many as the CP length of the second data symbol 723, the RU may input the cyclically shifted first data symbol 760 to the CP inserter. Since the CP inserter inserts the last sample group of the input symbol in front, the sample group #4 is added to the cyclically shifted first data symbol 760. The CP inserter may output sample group #4, sample group #5, sample group #0, sample group #1, sample group #2, sample group #3, and sample group #4. The RU may input the second data symbol 723 to the CP inserter. The sample group #5 is added to the second data symbol 723. The CP inserter may output sample group #5, sample group #0, sample group #1, sample group #2, sample group #3, sample group #4, and sample group #5. The RU may generate the RIM-RS 700, based on the CP inserter of the general OFDM symbol, by performing a cyclic shift on the first data symbol of the RIM-RS.

Since RIM-RS is used for the purpose of detecting remote interference signals, its OFDM symbol structure is different from the existing NR OFDM symbol structure, and its carrier frequency is also operated differently from NR. Therefore, the RIM-RS is required to perform separate resource mapping, IFFT, CP insertion, and carrier frequency modulation that are different from the existing NR channels. However, it is inefficient from the system perspective to have a separate processing chain for processing only RIM-RS. Therefore, as the RU generates RIM-RS based on the processing chain (e.g., CP inserter) of the existing NR channel, the cyclic shift according to the embodiments may increase the efficiency of the system.

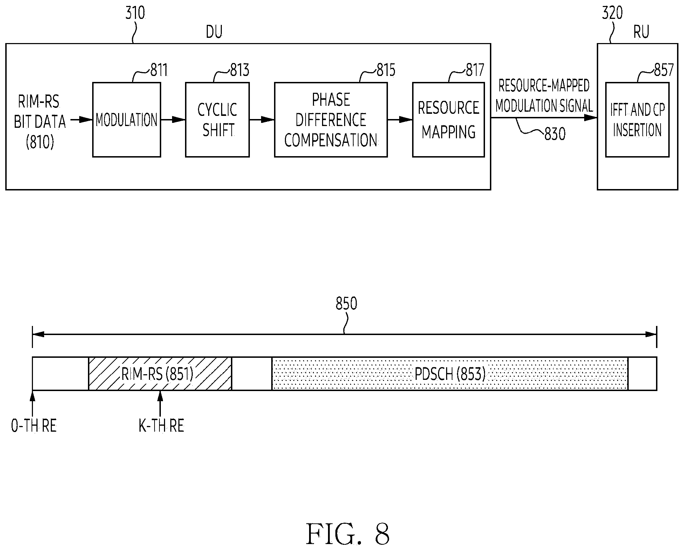

FIG. 8 illustrates a functional configuration per network entity for downlink transmission. A network entity may include a DU 310 or a RU 320.

Referring to FIG. 8, in order to increase frequency utilization, the RIM-RS and channels (hereinafter referred to as general NR channels) other than the RIM-RS may be allocated to the same OFDM symbol using different frequency resources. For example, in frequency domain 850, PDSCH 853 may be allocated to a frequency region other than a frequency region to which the RIM-RS 851 is mapped.

In the general function split, the DU 310 processes a signal in the frequency domain, and the RU 320 processes a signal in the time domain after performing IFFT. As illustrated in FIG. 7, since the CP length and the data symbol length correspond to the time order, the cyclic shift may be performed based on signal processing of the time domain in the RU 320. However, in case that the RIM-RS 851 and a general NR channel (e.g., PDSCH) are mixed on the frequency domain 850, the cyclic shift for the RIM-RS is required to be selectively applied. However, it is not easy to separate frequency resources in the time domain. Therefore, selective cyclic shift for RIM-RS is required through signal processing in the frequency domain. Hereinafter, a procedure of the DU 310 and the RU 320 for generating the RIM-RS 851 is described based on the processing chain for general NR channels.

The DU 310 may generate RIM-RS bit data 810. The DU 310 may perform modulation 811. The DU 310 may perform QPSK modulation on the RIM-RS bit data 810. The DU 310 may generate a complex-valued symbol based on the QPSK modulation. The DU 310 may perform cyclic shift 813. The DU 310 may perform cyclic shift on the complex-valued symbol. As a result, it is a cyclic shift in the time domain, but it corresponds to a phase rotation in the frequency domain. The DU 310 may rotate a phase of complex-valued symbol for each RE of the RIM-RS. The DU 310 may perform a phase difference compensation 815. The DU 310 may perform a phase difference compensation for the cyclic shift result. Herein, the phase difference compensation means an operation of compensating for a phase difference caused by a difference between a carrier frequency of the general NR channel and a carrier frequency of the RIM-RS. After that, the DU 310 may perform resource mapping 817.

The DU 310 may transmit a modulation signal 830 to the RU 320, based on the result of resource mapping 817. The resource-mapped modulation signal 830 means an IQ signal corresponding to the RIM-RS. For example, the resource-mapped modulation signal 830 may include a real part of 16-bit and an imaginary part of 16-bit. Thereafter, the RU 320 may perform IFFT and CP insertion 857. The RU 320 may generate OFDM baseband signal of the RIM-RS through IFFT conversion and CP insertion to the received modulation signal 830. Although not illustrated in FIG. 8, the RU 320 may perform precoding. The RU 320 may generate an OFDM baseband signal of the RIM-RS through precoding, IFFT conversion, and CP insertion to the received modulation signal 830.

In FIG. 6, a lossless compression scheme between DU-RU is described, in which other functions (e.g., complex mapping, IQ signal generation) of modulation except for bit alignment for resource mapping are performed in the RU. In FIG. 8, a method for generating RIM-RS based on a processing chain of a general NR channel is described. However, since modulation, cyclic shift, and phase difference compensation are performed in the DU in FIG. 8, it is difficult to achieve the lossless compression scheme illustrated in FIG. 6 as it is. Therefore, in order to generate RIM-RS through a processing chain of the general NR channel and bit data according to the lossless compression technique, processing operations for the RIM-RS need to be performed in the RU. That is, among the modulation functions, in addition to bit alignment for resource mapping, other functions (e.g., complex mapping, IQ signal generation), cyclic shift, and phase difference compensation need to be performed in the RU.

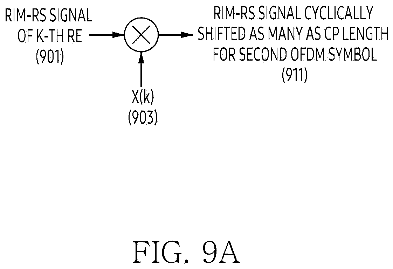

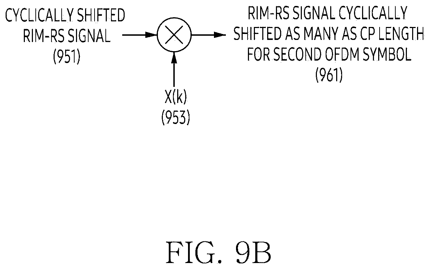

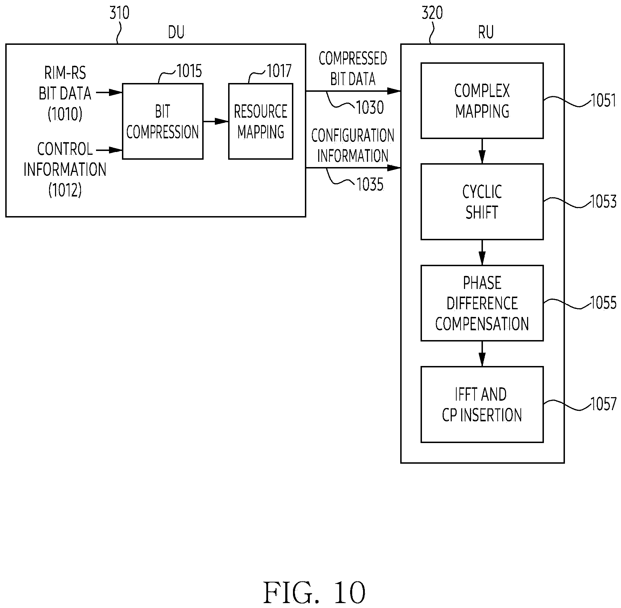

Hereinafter, in FIG. 9A and 9B, functions for generating RIM-RS from bit data provided by the lossless compression scheme are described. In FIG. 10, the overall operations of DU and RU are described.

FIG. 9A illustrates an example of a cyclic shifter according to embodiments. A cyclic shifter according to embodiments may be implemented by an RU (e.g., the RU 320 of FIG. 3A). The cyclic shifter may be implemented in a shape of hardware within the RU, software of a processor within the RU, or a combination of hardware and software. In order to reduce the required bandwidth between DU-RU through a lossless compression scheme, the RU may perform a cyclic shift for the RIM-RS.

Referring to FIG. 9A, the cyclic shifter may output a cyclically shifted RIM-RS signal 911 by performing phase rotation on the RIM-RS signal 901. In case that the RIM-RS signal 901 is mixed with the NR channel (e.g., PDSCH) in the frequency domain, the cyclic shift for the RIM-RS signal 901 should be selectively applied. However, frequency resource split is not possible in the time domain. Therefore, the cyclic shifter according to the embodiments may perform a phase rotation in the frequency domain, instead of the cyclic shift in the time domain. The cyclic shifter of the RU may perform a selective phase rotation for the RIM-RS through signal processing in the frequency domain. The cyclic shifter may rotate a phase of the RIM-RS signal 901, by multiplying the RIM-RS signal assigned to k-th RE by a complex value x (k) (903). For example, the complex value x (k) of the cyclic shifter may be determined based on the following Equation.

$$[\text{Equation 1}]$$

$$x(k) = \exp\left(-j * 2 * pi * n\_cp\_l1 * k\_prime/n\_iFFT\right)$$

$$[\text{Equation 2}]$$

$$k\_prime = (k + (n\_iFFT - n\_RB * 6))\%n\_iFFT$$

n_cp_l1 means a CP length of a second RIM-RS symbol of the RIM-RS, n_iFFT means an iFFT size, and n_RB means the total number of RBs (resource blocks) of the bandwidth including RIM-RS. Each RB includes 12 REs. 'k' indicates an index of corresponding RE within a bandwidth. exp ($\cdot$) is an exponential function and % means a modulo operator.

In summary, the cyclic shifter may perform a cyclic shift for the RIM-RS through a phase rotation in the frequency domain. Through the cyclic shift, the RU may insert a CP (e.g., the RIM-RS CP 710) of the RIM-RS into the RIM-RS symbol (e.g., the first RIM-RS symbol 721, the second RIM-RS symbol 723), based on the CP inserter of the general NR channel.

FIG. 9B illustrates an example of a phase difference compensator according to embodiments. The phase difference compensator according to embodiments may be implemented by an RU (e.g., the RU 320 of FIG. 3A). The phase difference compensator may be implemented in a form of hardware within the RU, software of a processor within the RU, or a combination of hardware and software. In order to reduce the required bandwidth between DU-RU through a lossless compression scheme, the RU may perform a phase difference compensation for the RIM-RS.

Referring to FIG. 9B, the phase difference compensator may output a compensated RIM-RS signal 961 by performing a phase difference compensation on the cyclically shifted RIM-RS signal 951. In the 5G wireless communication system, a phase of a carrier frequency at a transmission OFDM symbol body start point is standardized to be 0 degrees, in order to enable channel estimation even if a terminal receives a carrier frequency different from that of the base station. If the RIM-RS is transmitted based on the same modulation chain as the general NR channel, the RU transmits the RIM-RS at the carrier frequency of the general NR channel. Therefore, a compensation for a phase difference between the carrier frequency of the general NR channel and the carrier frequency of the RIM-RS is required. In addition, a phase difference caused by a difference between OFDM symbol lengths of the general NR channel and the RIM-RS is also required to be compensated. Therefore, the phase difference compensator of the RU may compensate the phase difference of the cyclically shifted RIM-RS signal 951 by multiplying the cyclically shifted RIM-RS signal 951 by exp ($-j * \theta_{li}$). $\Theta_{li}$ indicates a phase difference of i-th symbol of the RIM-RS. For example, $\Theta_{l0}$ indicates a phase difference of a first OFDM symbol (e.g., the first RIM-RS symbol 721 of FIG. 7) of the RIM-RS. $\Theta_{l1}$ indicates a phase difference of a second RIM-RS symbol (e.g., the second RIM-RS symbol (723) of FIG. 7). Herein, $\Theta_{li}$ has the same value within the OFDM symbol regardless of an RE index.

FIG. 10 illustrates a functional configuration per network entity for RIM-RS transmission according to embodiments. A network entity may include a DU 310 or a RU 320. In FIG. 10, a device and a method for reducing a required bandwidth of an interface between DU and RU by transmitting a RIM-RS based on a lossless compression scheme are described.

Referring to FIG. 10, the DU 310 may obtain RIM-RS bit data 1010. The RIM-RS bit data 1010 may be determined based on a parameter required to generate a RIM-RS sequence. For example, the RIM-RS bit data 1010 may be configured with 2 bits. The DU 310 may generate control information 1012. The control information 1012 may indicate modulation method for bit data and a channel type for bit data so that RU 320 may generate complex-valued symbol. The control information 1012 may indicate QPSK. The control information 1012 may indicate RIM-RS. For example, an index for the modulation scheme and an index for the channel type 663 may be determined by predefined setting (e.g., pre-setting, M-plane of O-RAN) between the DU 310 and the RU 320. For example, the index '00' of the modulation scheme may mean QPSK modulation. The index '101100' of the channel type may indicate RIM-RS.

The DU 310 may perform bit compression 1015, based on the RIM-RS bit data 1010 and the control information 1012. The DU 310 may generate compressed bit data 1030 through the bit compression 1015. The DU 310 may perform resource mapping 1017 for bits of the compressed bit data 1030. For the resource mapping 1017, the DU 310 may perform bit alignment for bits of the compressed bit data 1030. The bit alignment means an operation of distinguishing bits into symbol units according to modulation order, in order to map bits to REs. The RU may be aligned into units of two bits for RIM-RS transmission according to embodiments. Each of two bits is allocated to one RE. That is, the DU 310 may map the compressed bit data to the frequency-time resource to which the RIM-RS is allocated. The compressed bit data may include bits for the RIM-RS.

The DU 310 may transmit the compressed bit data 1030 to the RU 320. The compressed bit data 1030 may include the RIM-RS bit data 1010. In some embodiments, the compressed bit data 1030 may include the control information 1012. Meanwhile, in some other embodiments, the compressed bit data 1030 may not include the control information 1012. In this case, information (e.g., channel type, modulation method) indicated by the control information 1012 may be predefined between the DU 310 and the RU 320 or provided by configuration information 1035 described below.

The DU 310 may transmit the configuration information 1035 to the RU 320. The configuration information 1035 may be used by the RU 320 to generate a complex-valued symbol of the RIM-RS from bit data of the RIM-RS, and generate a RIM-RS baseband signal, instead of the DU 310. The RU 320 may generate the RIM-RS baseband signal based on the configuration information 1035. According to an embodiment, the transmission frequency of the configuration information 1035 may be the same as the transmission frequency of the compressed bit data 1030. According to another embodiment, the transmission frequency of the configuration information 1035 may be lower than the transmission frequency of the compressed bit data 1030. Transmission of the configuration information 1035 may be performed with a bandwidth lower than a bandwidth of the compressed bit data 1030. Hereinafter, in order to generate the RIM-RS baseband signal, details of the configuration information 1035 are described together with each functional configuration of the RU 320.

The RU 320 may perform complex mapping 1051. The RU 320 may generate an IQ signal corresponding to the bit data 1030. The RU 320 may obtain a modulation scheme (e.g., QPSK) and a channel type (e.g., RIM-RS) based on the control information 1012 of the compressed bit data 1030. The RU 320 may generate a complex-valued symbol corresponding to the bit data 630, based on a modulation scheme (e.g., QPSK) and a channel type (e.g., RIM-RS). According to an embodiment, the configuration information 1035 may include information on a channel gain of the RIM-RS. Based on the channel gain, the RU 320 may generate a complex-valued symbol according to the modulation.

The RU 320 may perform the cyclic shift 1053. Since frequency resource split is difficult in the time domain, the RU 320 may perform a phase rotation in the frequency domain to be cyclically shifted in the time domain. Hereinafter, the cyclic shift may mean a phase rotation in the frequency domain. For the phase rotation, the configuration information 1305 may include various information.

According to an embodiment, the configuration information 1035 may include an indicator for indicating whether a symbol corresponding to the compressed bit data 1030 is a first symbol or a second symbol among two symbols of the RIM-RS. In order to utilize a CP inserter for a general NR channel, the RU 320 according to embodiments may perform cyclic shift on the first RIM-RS. For example, as illustrated in FIG. 7, the cyclic shift 750 is performed only on the first RIM-RS symbol 721. According to a symbol position of the RIM-RS, whether to perform the cyclic shift is performed varies. The RU 320 may perform the cyclic shift of the RIM-RS symbol based on the indicator.

According to an embodiment, the configuration information 1035 may include resource allocation information. That is, the configuration information 1035 may include information related to resource mapping 1017. The resource allocation information may indicate a time resource. For example, the resource allocation information may include a system frame number (SFN) for indicating a radio frame. For example, the resource allocation information may include a subframe number. For example, the resource allocation information may include a slot index. For example, the resource allocation information may include a symbol index. The resource allocation information may indicate a frequency resource. For example, the resource allocation information may include frequency offset information for the RIM-RS. For example, the resource allocation information may include an RE index for the RIM-RS. According to embodiments, a selective cyclic shift for the RIM-RS may be performed based on the resource allocation information. The RU 320 may perform a phase rotation based on identifying the RE to which the RIM-RS is allocated.

According to an embodiment, the configuration information 1035 may include cyclic shift information. For example, the configuration information 1035 may include information on a RIM-RS CP length. Herein, the CP length means a CP length of a symbol of the rear RIM-RS among the two RIM-RS symbols. At a position of the RE corresponding to the resource allocation information, the RU 320 may perform a phase rotation as many as the RIM-RS CP length.

The RU 320 may perform a phase difference compensation 1055. The phase difference compensation refers to a procedure for compensating for a difference between a carrier frequency of the NR channel and a carrier frequency of the RIM-RS. According to an embodiment, the configuration information 1035 may include phase difference information. The phase difference information may include phase difference information of the first RIM-RS symbol and phase difference information of the second RIM-RS symbol. That is, the configuration information 1035 may include phase difference information for each symbol. The phase difference information may be the same between REs within the same symbol. According to another embodiment, the configuration information 1035 may include information on a reference point of the RIM-RS in each symbol. The RU may calculate a phase difference of the corresponding symbol, based on the difference between the reference point of the RIM-RS and a carrier frequency of another NR channel.

The RU 320 may perform IFFT and CP insertion 1057. The RU 320 may generate a RIM-RS symbol based on IFFT to be applied to modulated complex-valued symbol and insert cyclic prefix (CP) to generate an OFDM baseband signal. According to an embodiment, the configuration information 1035 may include precoding information. The RU 320 may apply precoding to the RIM-RS for which the cyclic shift and the phase difference compensation are completed. According to an embodiment, a precoding matrix may be transmitted once at system startup through configuration information or may be updated if necessary. Based on the precoding information, the RU 320 may apply the precoding matrix to RS sequence. The RU 320 may generate an OFDM baseband signal of the RIM-RS, through the precoding, the IFFT, and the CP insertion.

According to an embodiment, the control information 1012 including modulation scheme and a channel type index may be removed from the compressed bit data 1030, in order to further reduce a required bandwidth between DU-RU. If the control information 1012 is removed from the compressed bit data 1030, the configuration information 1035 may include the control information 1012 of the RIM-RS. In this case, a length of the compressed bit data may be reduced. For example, if the control information 1012 is included in the configuration information 1035 and excluded from the compressed bit data 1030, a length of the compressed bit data 1030 may be reduced from 10-bit to 2-bit.

Unlike the RU illustrated in FIG. 6 for the lossless compression scheme, the RU according to the embodiments of the present disclosure may generate a RIM-RS baseband signal by additionally performing cyclic shift and phase difference compensation, in addition to the existing functions. The RU according to the embodiments may reduce RIM-RS bits on a fronthaul interface, based on complex mapping, cyclic shift, and phase difference compensation performed in the RU, not the DU. Accordingly, a required bandwidth between the DU and the RU may be reduced.

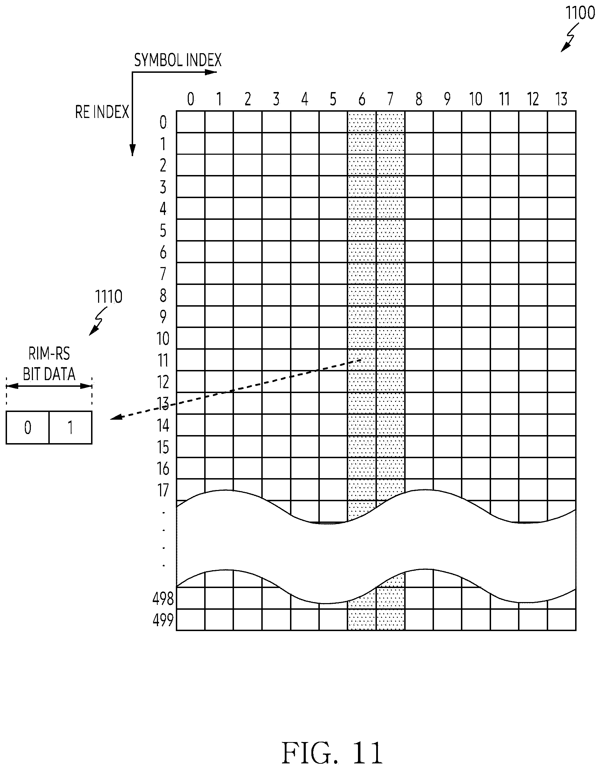

FIG. 11 illustrates an example of RIM-RS mapping according to embodiments. The RIM-RS may be transmitted on a RIM-RS resource, which is defined as a triplet of indexes in the time domain, frequency domain, and sequence domain. A complex-valued symbol of the RIM-RS may be generated based on QPSK modulation of a pseudo-random sequence generated based on a length $2^{31}-1$ gold sequence. Based on the triplet, not only a part of the QPSK-modulated gold sequence of length $2^{31}-1$ to be used for the RIM-RS but also the actual position in time and frequency may be calculated. Hereinafter, a time-frequency resource is described on a resource grid in FIG. 11.

Referring to FIG. 11, a resource grid 1100 may include a plurality of frequency-time resources. The frequency-time resources correspond to REs. A horizontal axis of the resource grid 1100 indicates symbols in ascending order of index. A vertical axis of the resource grid 1100 indicates REs in ascending order of index. According to the standard, up to four RIM-RS resources may be configured in a frequency domain (depending on the carrier bandwidth). A RIM-RS with 15 kHz subcarrier spacing (SCS) may occupy the entire carrier bandwidth or 96 RBs. The frequency resource of a RIM-RS with 30 kHz SCS may be limited to 48 or 96 RBs.

The DU 310 may map compressed bit data generated through bit compression to RE based on resource allocation information of the RIM-RS. One modulation symbol may be mapped to one RE. RIM-RS may be generated based on QPSK modulation from a pseudo-random sequence. Therefore, one QPSK modulation symbol may include two bits 1110. That is, two bits 1110 may be mapped to one RE. However, since the DU according to the embodiments performs resource mapping before modulation, the DU may align bits of the RIM-RS in units of two bits 1110. The aligned unit corresponds to one symbol.

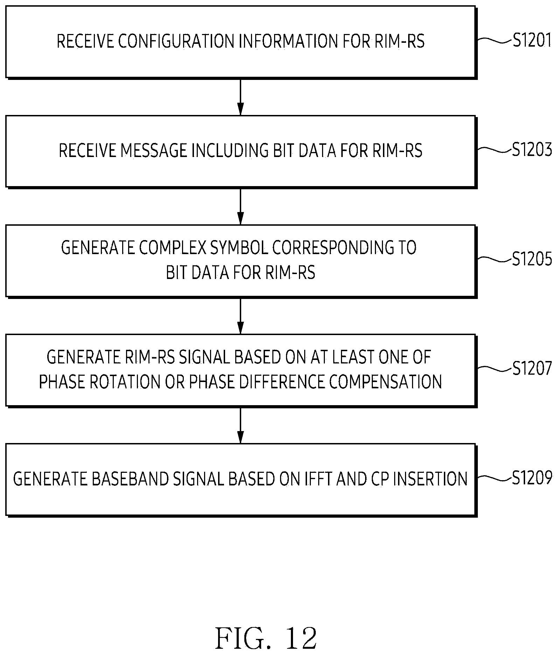

FIG. 12 illustrates an operation flow of an RU for RIM-RS transmission according to embodiments. The RU illustrates the RU 320 of FIG. 3A. According to an embodiment, the RU 320 may include an O-RU 353-1.

Referring to FIG. 12, in an operation S1201, the RU 320 may receive configuration information for RIM-RS. The configuration information may be applied in the same or similar manner as the description of the configuration information 1035 of FIG. 10. According to an embodiment, the configuration information may include channel gain information. The channel gain information may be used for complex mapping in the RU 320. In addition, according to an embodiment, the configuration information may include an indicator for indicating whether a symbol corresponding to compressed bit data 1030 is a first symbol or a second symbol among two symbols of the RIM-RS. The indicator may be used for phase rotation and phase difference compensation in the RU 320. In addition, according to an embodiment, the configuration information may include resource allocation information. The resource allocation information may be used for the phase rotation and the phase difference compensation in the RU 320. In addition, according to an embodiment, the configuration information may include cyclic shift information. The cyclic shift information may be used for the phase rotation in the RU 320. In addition, according to an embodiment, the configuration information may include phase difference information. The phase difference information may be used for the phase difference compensation in the RU 320. In addition, according to an embodiment, the configuration information may include precoding information. It may be used for application of a precoding matrix in the RU 320.

In an operation S1203, the RU 320 may receive a message including bit data for the RIM-RS. According to an embodiment, the bit data for the RIM-RS may include bits of the RIM-RS. According to an embodiment, the bit data for the RIM-RS may include the bits of the RIM-RS and control information for the RIM-RS. The control information may indicate a channel type and a modulation scheme of transmitted data. The control information may include information for indicating that the bits are the RIM-RS. The control information may include information for indicating that the modulation scheme of the bits is QPSK. Meanwhile, according to another embodiment, the control information may be included in the configuration information of the operation S1201, instead of the bit data.

In an operation S1205, the RU 320 may generate a complex-valued symbol corresponding to bit data for the RIM-RS. The RU 320 may obtain two bits of the RIM-RS from the bit data. The two bits of the RIM-RS may be used for QPSK modulation. The RU 320 may generate an RS sequence by performing the QPSK modulation based on the two bits. The RU 320 may apply a channel gain to the generated RS sequence. Herein, the channel gain may be obtained from the configuration information in the operation S1201. The RU 320 may generate the complex-valued symbol by applying the channel gain to the generated RF sequence. For example, the RU 320 may generate the complex-valued symbol by multiplying an amplitude scaling factor, in order to control RIM-RS transmission power.

In an operation S1207, the RU 320 may generate an RIM-RS signal based on at least one of the phase rotation and the phase difference compensation. The RU 320 may perform the phase rotation. The phase rotation means a cyclic shift in a time domain. As mentioned in FIG. 7, the RU 320 may perform the phase rotation in a frequency domain, in order to generate a baseband signal of the RIM-RS through a single CP inserter of the RU. RIM-RS transmission may include two RIM-RS symbols (e.g., in total length

$$\left(N_{\mathrm{u}}^{\mathrm{RIM}} + N_{\mathrm{CP}}^{\mathrm{RIM}}\right)T_{\mathrm{c}}$$

of 3GPP TS 38.211 5.3.3, corresponding to

$$N_{\mathrm{u}}^{\mathrm{RIM}}T_{\mathrm{c}} = (2 \cdot 2048\kappa \cdot 2^{-\mu})T_{\mathrm{c}} \quad,$$

$\kappa \cdot T_{\mathrm{C}} = T_S$, $T_{\mathrm{s}} = 1/\Delta f_{\mathrm{ref}} \cdot N_{\mathrm{f,ref}}$), $\Delta f_{\mathrm{ref}} = 15 \cdot 10^3$ Hz and $N_{\mathrm{f,ref}} = 2048$). The phase rotation may be applied to a first RIM-RS symbol among the two RIM-RS symbols. However, the phase rotation may not be applied to a second RIM-RS symbol among the two RIM-RS symbols.

The RU 320 may perform the phase rotation based on the configuration information. According to an embodiment, the configuration information may indicate whether the symbol of a current bit data is the first RIM-RS symbol among the two RIM-RS symbols. The configuration information may indicate whether a symbol of the current bit data is the second RIM-RS symbol among the two RIM-RS symbols. The RU 320 may perform the phase rotation based on identifying that the symbol of the current bit data is the first RIM-RS symbol.

The phase rotation may be performed as many as a CP length of the second symbol among the two RIM-RS symbols of the RIM-RS transmission. The configuration information may include information for indicating the CP length of the second symbol. For example, the configuration information may include an index for indicating the CP length of the second symbol. Also, for example, the configuration information may indicate a symbol index (a symbol index within a subframe). According to a 3GPP standard, the CP length varies according to the symbol index. The CP length according to the symbol index is as follows.

[Equation 3]

$$N_{\mathrm{CP},l}^{\mu} = \begin{cases} 512\kappa \cdot 2^{-\mu} & \text{extended cyclic prefix} \\ 144\kappa \cdot 2^{-\mu} + 16\kappa & \text{normal cyclic prefix, } l = 0 \text{ or } l = 7 \cdot 2^{\mu} \\ 144\kappa \cdot 2^{-\mu} & \text{normal cyclic prefix, } l \neq 0 \text{ and } l \neq 7 \cdot 2^{\mu} \end{cases}$$

$$N_{\mathrm{CP},l}^{\mu}$$

indicates a CP length at a symbol index l when numerology $\mu$. Since the RIM-RS is transmitted on an SCS of 15 kHz or 30 kHz, one of the lengths according to a normal cyclic prefix (a second row and a third row of the equation) may be used for the phase rotation.

The RU 320 may perform the phase difference compensation. Modulation and upconversion of a general NR channel (e.g., PDSCH) are performed based on a carrier frequency f0. On the other hand, modulation and upconversion of the RIM-RS are performed based on a reference point (f0RIM) configured for the RIM-RS. If the RIM-RS signal is transmitted through the same processing chain as the general NR channel implemented within the RU, it is required to compensate for a difference between the reference point (f0RIM) and the carrier frequency (f0).

Since the modulation and the upconversion of the RIM-RS are performed in a unit of an OFDM symbol, the RU 320 may identify phase difference information corresponding to the complex-valued symbol. If the complex-valued symbol is the first RIM-RS symbol among the two RIM-RS symbols, the RU 320 may identify first phase difference information corresponding to the first RIM-RS symbol. The RU 320 may perform the phase difference compensation on the phase-rotated complex-valued symbol, based on the first phase difference information. If the complex-valued symbol is the second RIM-RS symbol among the two RIM-RS symbols, the RU 320 may identify second phase difference information corresponding to the second RIM-RS symbol. The RU 320 may perform the phase difference compensation on the complex-valued symbol, based on the second phase difference information.

The RU 320 may perform the phase difference compensation based on the configuration information. The configuration information may identify second phase difference information corresponding to the first RIM-RS symbol. The configuration information may identify second phase difference information corresponding to the second RIM-RS symbol. According to another embodiment, configuration information 1035 may include information for the reference point of the RIM-RS. An RU may calculate a phase difference of a corresponding symbol based on a difference between a reference point of the RIM-RS and a carrier frequency of another NR channel. The reference point may be set to be the same or different for each symbol.

In an operation S1209, the RU 320 may generate a baseband signal based on IFFT and CP insertion. The RU 320 may apply the IFFT to the RIM-RS signal. The RU 320 may perform the CP insertion after applying the IFFT. According to an embodiment, a processing chain for the IFFT and the CP insertion may be used not only for the RIM-RS signal but also for generating an OFDM baseband signal of the general NR channel (e.g., PDSCH). Since the phase rotation and the phase difference compensation of the operation S1207 have been performed, the RU 320 may generate the baseband signal corresponding to the RIM-RS signal through an IFFT operator and a CP inserter for the general NR channel.

Although not illustrated in FIG. 12, according to another embodiment, precoding may be performed before the IFFT. A precoding matrix may be multiplied to the RIM-RS signal. In this case, the precoding matrix may be obtained from the configuration information of the operation S1201.

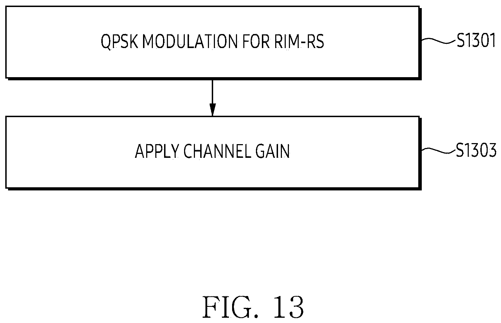

FIG. 13 illustrates an operation flow of an RU for complex mapping of RIM-RS according to embodiments. The RU exemplifies an RU 320 of FIG. 3A. According to an embodiment, the RU 320 may include an O-RU 353-1. Operations of FIG. 13 may correspond to the complex-valued symbol generation operation of the operation 1205 of FIG. 12.

Referring to FIG. 13, in an operation S1301, the RU 320 may perform QPSK modulation for the RIM-RS. The RU 320 may perform the QPSK modulation to map bits of the RIM-RS to a QPSK symbol based on control information. The RU 320 may obtain the control information. The control information may indicate a channel type of bit data. Additionally, the control information may indicate a modulation scheme of the bit data. According to an embodiment, the control information may be included in the bit data. According to another embodiment, the control information may be included in configuration information. The RU 320 may obtain an RS sequence by performing the QPSK modulation.

In an operation S1303, the RU 320 may apply a channel gain. The RU 320 may apply the channel gain to the RS sequence corresponding to a result of the QPSK modulation. For example, the RU 320 may obtain a parameter according to the channel gain in order to control transmission power of RIM-RS transmission. The parameter may include an amplitude scaling factor. The RU 320 may obtain a channel gain value of the RIM-RS based on the configuration information.

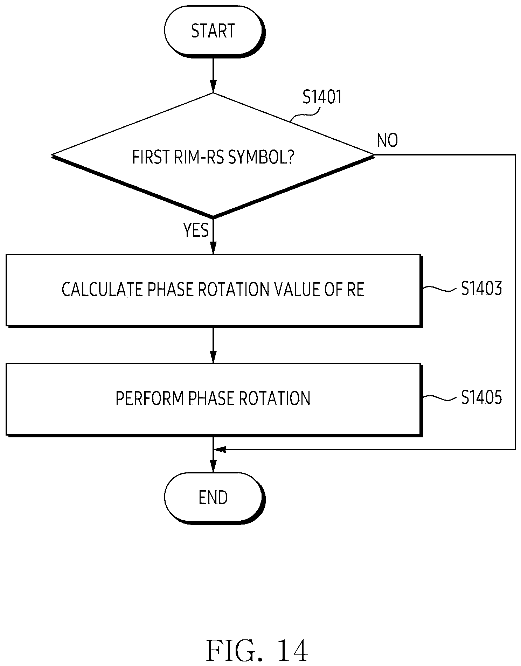

FIG. 14 illustrates an operation flow of an RU for phase rotation of RIM-RS according to embodiments. The RU exemplifies the RU 320 of FIG. 3A. According to an embodiment, the RU 320 may include an O-RU 353-1. The operations of FIG. 14 may correspond to the phase rotation operation of the operation 1207 of FIG. 12.

Referring to FIG. 14, in an operation S1401, the RU 320 may identify whether a symbol of bit data is a first RIM-RS symbol. RIM-RS transmission may be performed in a unit of two OFDM symbols. The RIM-RS transmission may include two RIM-RS symbols except for a RIM-RS CP. The RU 320 may identify whether the symbol of the bit data is the first symbol among the two RIM-RS symbols. In case that the symbol of the bit data is the first RIM-RS symbol, the RU 320 may perform an operation S1403. Whether the symbol of the bit data is the first symbol among the two RIM-RS symbols may be identified based on the configuration information of the operation S1201 of FIG. 12.

In an operation S1403, the RU 320 may calculate a phase rotation value of an RE. The RU 320 may identify the RE for the RIM-RS transmission. The RU 320 may calculate the phase rotation value corresponding to the RE. Rotation of a phase in a frequency domain indicates a cyclic shift in a time domain. The RU 320 may calculate a phase rotation value (e.g., a complex number value x(k) 903) for a RIM-RS signal allocated to a k-th RE. According to an embodiment, the RU 320 may calculate a phase rotation value corresponding to a CP length of a second symbol among the two RIM-RS symbols for the RIM-RS transmission. Here, the CP length of the second symbol may be identified based on the configuration information of the operation S1201 of FIG. 12.

In an operation S1405, the RU 320 may perform phase rotation. The phase rotation means that the phase in the frequency domain is rotated. The RU 320 may perform phase rotation on a complex-valued symbol of the k-th RE of the first RIM-RS symbol, among modulated symbols.

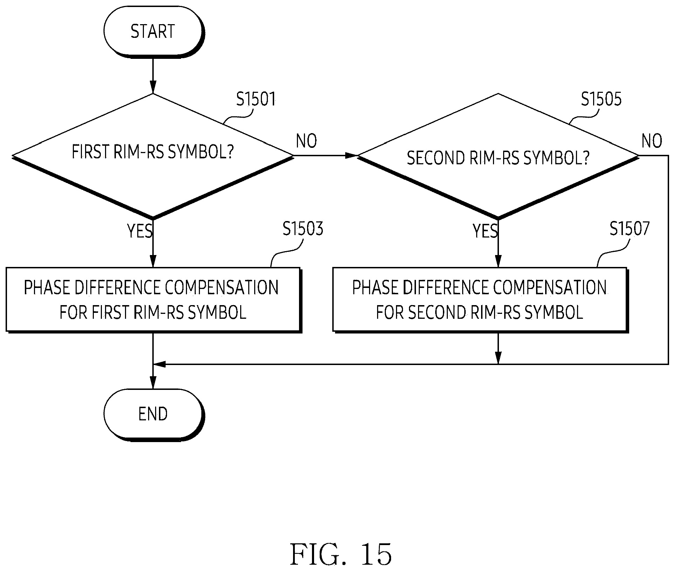

FIG. 15 illustrates an operation flow of an RU for phase difference compensation of RIM-RS according to embodiments. The RU exemplifies the RU 320 of FIG. 3A. According to an embodiment, the RU 320 may include an O-RU 353-1.

Referring to FIG. 15, in an operation S1501, the RU 320 may identify whether a symbol of bit data is a first RIM-RS symbol. The first RIM-RS symbol may be a complex-valued symbol on which the phase rotation according to FIG. 14 is performed. The RU 320 may identify whether the symbol of the bit data is the first RIM-RS symbol based on configuration information. The configuration information may indicate whether the symbol of the bit data is the first RIM-RS symbol. The configuration information may indicate whether the symbol of the bit data is a second RIM-RS symbol. The configuration information may indicate whether the symbol of the bit data is the first RIM-RS symbol or the second RIM-RS symbol.

In case that the symbol of the bit data is the first RIM-RS symbol, the RU 320 may perform an operation S1503. In case that the symbol of the bit data is not the first RIM-RS symbol, the RU 320 may perform an operation S1505.

In the operation S1503, the RU 320 may perform phase difference compensation for the first RIM-RS symbol. The RU 320 may identify a first phase difference value for the first RIM-RS symbol. Phase difference information of the configuration information may indicate the first phase difference value for the first RIM-RS symbol. A phase difference compensator of the RU 320 may utilize a modulation chain of a general NR channel. The RU 320 may compensate for a phase difference of a carrier generated in a process of generating the RIM-RS. The RU 320 may compensate for a phase difference $\Theta_{I_0}$ value for the first RIM-RS symbol.

In the operation S1505, the RU 320 may identify whether the symbol of the bit data is the second RIM-RS symbol. The RU 320 may identify whether the symbol of bit data is the second RIM-RS symbol based on the configuration information. The configuration information may indicate whether the symbol of the bit data is the first RIM-RS symbol. The configuration information may indicate whether the symbol of the bit data is the second RIM-RS symbol. The configuration information may indicate whether the symbol of the bit data is the first RIM-RS symbol or the second RIM-RS symbol.

In case that the symbol of the bit data is the second RIM-RS symbol, the RU 320 may perform the operation S1507. When the symbol of the bit data is not the second RIM-RS symbol, the RU 320 may terminate an operation.

In the operation S1507, the RU 320 may perform phase difference compensation for the second RIM-RS. The RU 320 may identify a second phase difference value for the second RIM-RS symbol. The phase difference information of the configuration information may indicate the second phase difference value for the second RIM-RS symbol. The RU 320 may compensate for a $\Theta_{I_1}$ value for the second RIM-RS symbol.

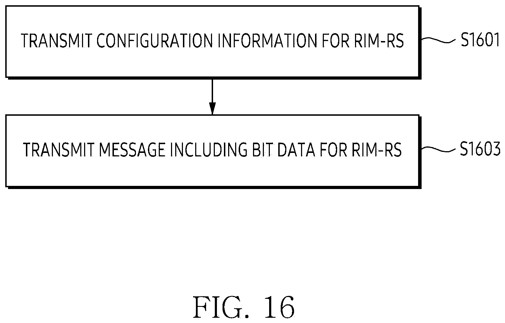

FIG. 16 illustrates an operation flow of a DU for RIM-RS transmission according to embodiments. The DU exemplifies the DU 310 of FIG. 3A. According to an embodiment, an RU 320 may include an O-DU 351.

Referring to FIG. 16, in an operation S1601, the DU 310 may transmit configuration information on RIM-RS. The DU 310 may transmit the configuration information on the RIM-RS to the RU 320. The configuration information may be applied in the same or similar scheme to the description of the configuration information on the configuration information 1035 of FIG. 10 or the configuration information of operation S1201 of FIG. 12. According to an embodiment, the configuration information may be transmitted based on a C-plane message or an M-plane message of an O-RAN standard. According to another embodiment, the configuration information on the RIM-RS may be included in a message defined regardless of the O-RAN standard. The DU 310 may transmit the message to the RU 320.

In an operation S1603, the DU 310 may transmit a message including bit data on the RIM-RS. The DU 310 may transmit the message including the bit data on the RIM-RS to the RU 320. According to an embodiment, the bit data on the RIM-RS may include bits of the RIM-RS. According to an embodiment, the bit data on the RIM-RS may include the bits of the RIM-RS and control information for the RIM-RS. The control information may indicate a channel type and a modulation scheme of transmitted data. The control information may include information for indicating that the bits are the RIM-RS. The control information may include information for indicating that the modulation scheme of the bits is QPSK. Meanwhile, according to another embodiment, the control information may be included in the configuration information of the operation S1201, instead of the bit data.

According to an embodiment, the bit data on the RIM-RS may be included in a U-plane message of the O-RAN standard. The DU 310 may transmit the U-plane message to the RU 320. According to another embodiment, the bit data on the RIM-RS may be included in a message defined regardless of the O-RAN standard. The DU 310 may transmit the message to the RU 320.

In embodiments of the present disclosure, a device and a method for reducing an interface requirement bandwidth between DU-RU have been proposed by applying a RU modulation lossless compression technique to the RIM-RS. The device and the method according to embodiments of the present disclosure enable transmission of a RIM-RS signal in an existing commercialized RU modulation lossless compression function split 5G system. The RU modulation lossless compression technique means a technique in which a function such as complex mapping, IQ signal generation, and the like, excluding bit alignment, among functions of modulation, are performed in an RU for lossless compression.

An effect of reducing a requirement bandwidth when the RU modulation lossless compression technique is applied to the RIM-RS may be calculated differently according to embodiments. For example, as described in FIG. 6, a DU may compress the bit data 610b and the control information 612 of the RIM-RS into 10-bit and then transmit to the RU.

Since complex mapping is performed in the RU, the RU may generate a 16-bit complex-valued symbol, that is, a complex-valued symbol of the RIM-RS having 16-bit of a real part and 16-bit of an imaginary part. The requirement bandwidth between the DU and the RU is reduced to 31.25% (=10/32) compared to uncompressed. As another embodiment, when only 2-bit bit data of the RIM-RS is transmitted to the RU without control information as in FIG. 11, the bandwidth between the DU and the RU may be reduced to a maximum of 6.25% (=2/32) compared to uncompressed. Since configuration information transmitted from the DU to the RU transmitted once for a first time when setting or may be updated as needed, it may be excluded from the bandwidth reduction rate calculation. That is, through complex mapping, phase rotation, and phase difference compensation in RU according to embodiments, it is possible to operate a low requirement bandwidth between DU-RU. Unlike performing cyclic shift and phase difference compensation of a frequency domain in the DU for RIM-RS transmission the DU and the RU according to embodiments perform cyclic shift and phase difference compensation of a frequency domain in the RU. Through this, bit compression is possible, and the RU may transmit the RIM-RS by utilizing a modulation chain of IFFT and CP insertion for a general NR channel.

According to embodiments, a method performed by a radio unit (RU) may comprise receiving, from a distribute unit (DU), configuration information for remote interference management (RIM) - reference signal (RS). The method may comprise receiving, from the DU, a message including bit data for the RIM-RS. The method may comprise generating a complex-valued symbol corresponding to the bit data for the RIM-RS. The method may comprise generating a RIM-RS signal by performing at least one of a phase rotation or a phase difference compensation for the complex-valued symbol based on the configuration information. The method may comprise generating a baseband signal corresponding to the RIM-RS signal based on an inverse fast fourier transform (IFFT) and cyclic prefix (CP) insertion of the RU.

According to an embodiment, generating of the complex-valued symbol may comprise obtaining two bits of the bit data for the RIM-RS. Generating of the complex-valued symbol may comprise performing a quadrature phase shift keying (QPSK) modulation to the two bits.

According to an embodiment, generating of the complex-valued symbol may comprise obtaining a RS sequence based on the QPSK. Generating of the complex-valued symbol may comprise generating the complex-valued symbol by applying channel gain to the RS sequence. Information on the channel gain may be obtained by the configuration information.

According to an embodiment, generating of the RIM-RS signal may comprise identifying whether the bit data corresponds to a first RIM-RS symbol among two symbols for the RIM-RS. Generating of the RIM-RS signal may comprise, in a case that the bit data corresponds to the first RIM-RS symbol, performing a phase rotation for the complex-valued symbol. Generating of the RIM-RS signal may comprise performing a first phase difference compensation to apply a first compensation value corresponding to the first RIM-RS symbol to the phase-rotated complex-valued symbol.

According to an embodiment, generating of the RIM-RS signal may comprise identifying whether the bit data corresponds to a second RIM-RS symbol among the two symbols for the RIM-RS. Generating of the RIM-RS signal may comprise, in a case that the bit data corresponds to the second RIM-RS symbol, performing a second phase difference compensation to apply a second compensation value corresponding to the second RIM-RS symbol to the complex-valued symbol.

According to an embodiment, the first compensation value may be determined based on a difference between a reference point configured for the RIM-RS in the first RIM-RS symbol and a carrier frequency of a NR channel different from the RIM-RS. The second compensation value may be determined based on a difference between a reference point configured for the RIM-RS in the second RIM-RS symbol and the carrier frequency of the NR channel different from the RIM-RS.

According to an embodiment, the complex-valued symbol may be a first RIM-RS symbol among the two symbols for the RIM-RS. The phase rotation for the complex-valued symbol may be performed based on a CP length for a second RIM-RS symbol among two symbols for the RIM-RS. The CP length for the second RIM-RS symbol may be determined based on an index of the second RIM-RS symbol within a slot.

According to an embodiment, generating the baseband signal may comprise identifying a CP length for the first RIM-RS symbol. Generating the baseband signal may comprise performing the CP insertion as many as the CP length for the first RIM-RS symbol based on a CP inserter for physical downlink shared channel (PDSCH), physical downlink control channel (PDCCH), physical uplink shared channel (PUSCH), or physical uplink control channel (PUCCH). Generating the baseband signal may comprise performing the CP insertion as many as a CP length for the second RIM-RS symbol based on the CP inserter.

According to an embodiment, the configuration information may include at least one of an indicator for indicating whether a symbol corresponding to the bit data is a first symbol or a second symbol among two symbols of the RIM-RS, resource allocation information for indicating time resources and frequency resources through which the RIM-RS is transmitted, information for indicating a length of a CP of the second RIM-RS symbol among the two symbols of the RIM-RS, or compensation information for performing a phase difference compensation in each symbol of the RIM-RS.

According to an embodiment, the bit data for the RIM-RS may include bits of the RIM-RS and control information. The control information may include information for indicating that a modulation scheme related to the bits is quadrature phase shift keying (QPSK) and information for indicating that a type of the bits corresponds to the RIM-RS.

According to embodiments, an electronic device of a radio unit (RU) may comprise a fronthaul transceiver, at least one radio frequency (RF) transceiver, and at least one processor coupled to the fronthaul transceiver and the at least one RF transceiver. The at least one processor may be configured to receive, from a distribute unit (DU) through the fronthaul transceiver, configuration information for remote interference management (RIM) - reference signal (RS). The at least one processor may be configured to receive, from the DU through the fronthaul transceiver, a message including bit data for the RIM-RS. The at least one processor may be configured to generate a complex-valued symbol corresponding to the bit data for the RIM-RS. The at least one processor may be configured to generate a RIM-RS signal by performing at least one of a phase rotation or a phase difference compensation for the complex-valued symbol based on the configuration information. The at least one processor may be configured to generate a baseband signal corresponding to the RIM-RS signal based on an inverse fast fourier transform (IFFT) and cyclic prefix (CP) insertion of the RU.

According to an embodiment, for generating of the complex-valued symbol, the at least one processor may be configured to obtain two bits of the bit data for the RIM-RS. For generating of the complex-valued symbol, the at least one processor may be configured to perform a quadrature phase shift keying (QPSK) modulation to the two bits.

According to an embodiment, for generating of the complex-valued symbol, the at least one processor may be configured to obtain a RS sequence based on the QPSK. For generating of the complex-valued symbol, the at least one processor may be configured to generate the complex-valued symbol by applying channel gain to the RS sequence. Information on the channel gain may be obtained by the configuration information.

According to an embodiment, for generating of the RIM-RS signal, the at least one processor may be configured to identify whether the bit data corresponds to a first RIM-RS symbol among two symbols for the RIM-RS. For generating of the RIM-RS signal, the at least one processor may be configured to, in a case that the bit data corresponds to the first RIM-RS symbol, perform a phase rotation for the complex-valued symbol. For generating of the RIM-RS signal, the at least one processor may be configured to perform a first phase difference compensation to apply a first compensation value corresponding to the first RIM-RS symbol to the phase-rotated complex-valued symbol.

According to an embodiment, for generating of the RIM-RS signal, the at least one processor may be configured to identify whether the bit data corresponds to a second RIM-RS symbol among the two symbols for the RIM-RS. For generating of the RIM-RS signal, the at least one processor may be configured to, in a case that the bit data corresponds to the second RIM-RS symbol, perform a second phase difference compensation to apply a second compensation value corresponding to the second RIM-RS symbol to the complex-valued symbol.

According to an embodiment, the first compensation value may be determined based on a difference between a reference point configured for the RIM-RS in the first RIM-RS symbol and a carrier frequency of a NR channel different from the RIM-RS. The second compensation value may be determined based on a difference between a reference point configured for the RIM-RS in the second RIM-RS symbol and the carrier frequency of the NR channel different from the RIM-RS.

According to an embodiment, the complex-valued symbol may be a first RIM-RS symbol among the two symbols for the RIM-RS. The phase rotation for the complex-valued symbol may be performed based on a CP length for a second RIM-RS symbol among two symbols for the RIM-RS. The CP length for the second RIM-RS symbol may be determined based on an index of the second RIM-RS symbol within a slot.

According to an embodiment, for generating the baseband signal, the at least one processor may be configured to identify a CP length for the first RIM-RS symbol. For generating the baseband signal, the at least one processor may be configured to perform the CP insertion as many as the CP length for the first RIM-RS symbol based on a CP inserter for physical downlink shared channel (PDSCH), physical downlink control channel (PDCCH), physical uplink shared channel (PUSCH), or physical uplink control channel (PUCCH). For generating the baseband signal, the at least one processor may be configured to perform the CP insertion as many as a CP length for the second RIM-RS symbol based on the CP inserter.

According to an embodiment, the configuration information may include at least one of an indicator for indicating whether a symbol corresponding to the bit data is a first symbol or a second symbol among two symbols of the RIM-RS, resource allocation information for indicating time resources and frequency resources through which the RIM-RS is transmitted, information for indicating a length of a CP of the second RIM-RS symbol among the two symbols of the RIM-RS, or compensation information for performing a phase difference compensation in each symbol of the RIM-RS.

According to an embodiment, the bit data for the RIM-RS may include bits of the RIM-RS and control information. The control information may include information for indicating that a modulation scheme related to the bits is quadrature phase shift keying (QPSK) and information for indicating that a type of the bits corresponds to the RIM-RS.

According to embodiments, a method performed by a distributed unit (DU) may comprise transmitting, to a radio unit (RU), configuration information for remote interference management (RIM) - reference signal (RS). The method may comprise transmitting, to the RU, a message including bit data for the RIM-RS. The configuration information may be used for at least one of a phase rotation or a phase difference compensation for a complex-valued symbol to generate a baseband signal through inverse fast fourier transform (IFFT) and cyclic prefix (CP) insertion of the RU. The complex-valued symbol may correspond to a modulation result of the bit data for the RIM-RS.

According to embodiments, an electronic device of a distributed unit (DU) may comprise at least one transceiver including a fronthaul transceiver, and at least one processor coupled to the at least one transceiver. The at least one processor may be configured to transmit, to a radio unit (RU) through the fronthaul transceiver, configuration information for remote interference management (RIM) - reference signal (RS). The at least one processor may be configured to transmit, to the RU through the fronthaul transceiver, a message including bit data for the RIM-RS. The configuration information may be used for at least one of a phase rotation or a phase difference compensation for a complex-valued symbol to generate a baseband signal through inverse fast fourier transform (IFFT) and cyclic prefix (CP) insertion of the RU. The complex-valued symbol may correspond to a modulation result of the bit data for the RIM-RS.

According to embodiments, a non-transitory computer-readable storage medium is provided. The non-transitory computer-readable storage medium may store one or more programs. The one or more programs may comprise instructions which, when executed by a processor of a radio unit (RU), cause the RU to receive, from a distribute unit (DU), configuration information for remote interference management (RIM) - reference signal (RS). The one or more programs may comprise instructions which cause the RU to receive, from the DU, a message including bit data for the RIM-RS. The one or more programs may comprise instructions which cause the RU to generate a complex-valued symbol corresponding to the bit data for the RIM-RS. The one or more programs may comprise instructions which cause the RU to generate a RIM-RS signal by performing at least one of a phase rotation or a phase difference compensation for the complex-valued symbol based on the configuration information. The one or more programs may comprise instructions which cause the RU to generate a baseband signal corresponding to the RIM-RS signal based on an inverse fast fourier transform (IFFT) and cyclic prefix (CP) insertion of the RU.

According to embodiments, a non-transitory computer-readable storage medium is provided. The non-transitory computer-readable storage medium may store one or more programs. The one or more programs may comprise instructions which, when executed by a processor of a distributed unit (DU), cause the RU to transmit, to a radio unit (RU), configuration information for remote interference management (RIM) - reference signal (RS). The one or more programs may comprise instructions which cause the RU to transmitting, to the RU, a message including bit data for the RIM-RS. The configuration information may be used for at least one of a phase rotation or a phase difference compensation for a complex-valued symbol to generate a baseband signal through inverse fast fourier transform (IFFT) and cyclic prefix (CP) insertion of the RU. The complex-valued symbol may correspond to a modulation result of the bit data for the RIM-RS.

Methods according to embodiments described in claims or specifications of the present disclosure may be implemented as a form of hardware, software, or a combination of hardware and software.

In case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure.

Such a program (software module, software) may be stored in a random access memory, a non-volatile memory including a flash memory, a read only memory (ROM), an electrically erasable programmable read only memory (EEPROM), a magnetic disc storage device, a compact disc-ROM (CD-ROM), an optical storage device (digital versatile discs (DVDs) or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

Meanwhile, specific embodiments have been described in the detailed description of the present disclosure, and of course, various modifications are possible without departing from the scope of the present disclosure.

**Claims**

1. A method performed by a radio unit (RU), the method comprising:

receiving, from a distribute unit (DU), configuration information for remote interference management (RIM) - reference signal (RS);

receiving, from the DU, a message including bit data for the RIM-RS;

generating a complex-valued symbol corresponding to the bit data for the RIM-RS;

generating a RIM-RS signal by performing at least one of a phase rotation or a phase difference compensation for the complex-valued symbol based on the configuration information; and

generating a baseband signal corresponding to the RIM-RS signal based on an inverse fast fourier transform (IFFT) and cyclic prefix (CP) insertion of the RU.

2. The method of claim 1, wherein generating of the complex-valued symbol comprises:

obtaining two bits of the bit data for the RIM-RS; and

performing a quadrature phase shift keying (QPSK) modulation to the two bits.

3. The method of claim 2, wherein generating of the complex-valued symbol comprises:

obtaining a RS sequence based on the QPSK; and

generating the complex-valued symbol by applying channel gain to the RS sequence, and

wherein information on the channel gain is obtained by the configuration information.

4. The method of claim 1, wherein generating of the RIM-RS signal comprises:

identifying whether the bit data corresponds to a first RIM-RS symbol among two symbols for the RIM-RS;

in a case that the bit data corresponds to the first RIM-RS symbol, performing a phase rotation for the complex-valued symbol; and

performing a first phase difference compensation to apply a first compensation value corresponding to the first RIM-RS symbol to the phase-rotated complex-valued symbol.

5. The method of claim 4, wherein generating of the RIM-RS signal comprises:

identifying whether the bit data corresponds to a second RIM-RS symbol among the two symbols for the RIM-RS; and

in a case that the bit data corresponds to the second RIM-RS symbol, performing a second phase difference compensation to apply a second compensation value corresponding to the second RIM-RS symbol to the complex-valued symbol.

6. The method of claim 5,

wherein the first compensation value is determined based on a difference between a reference point configured for the RIM-RS in the first RIM-RS symbol and a carrier frequency of a NR channel different from the RIM-RS, and

wherein the second compensation value is determined based on a difference between a reference point configured for the RIM-RS in the second RIM-RS symbol and the carrier frequency of the NR channel different from the RIM-RS.

7. The method of claim 1,

wherein the complex-valued symbol is a first RIM-RS symbol among the two symbols for the RIM-RS,

wherein the phase rotation for the complex-valued symbol is performed based on a CP length for a second RIM-RS symbol among two symbols for the RIM-RS, and

wherein the CP length for the second RIM-RS symbol is determined based on an index of the second RIM-RS symbol within a slot.

8. The method of claim 7, wherein generating the baseband signal comprises:

identifying a CP length for the first RIM-RS symbol; and

performing the CP insertion as many as the CP length for the first RIM-RS symbol based on a CP inserter for physical downlink shared channel (PDSCH), physical downlink control channel (PDCCH), physical uplink shared channel (PUSCH), or physical uplink control channel (PUCCH); and

performing the CP insertion as many as a CP length for the second RIM-RS symbol based on the CP inserter.

9.  The method of claim 1,
    wherein the configuration information includes at least one of:

    an indicator for indicating whether a symbol corresponding to the bit data is a first symbol or a second symbol among two symbols of the RIM-RS;
    resource allocation information for indicating time resources and frequency resources through which the RIM-RS is transmitted;
    information for indicating a length of a CP of the second RIM-RS symbol among the two symbols of the RIM-RS; or
    compensation information for performing a phase difference compensation in each symbol of the RIM-RS.

10. The method of claim 1,

    wherein the bit data for the RIM-RS includes bits of the RIM-RS and control information, and
    wherein the control information includes information for indicating that a modulation scheme related to the bits is quadrature phase shift keying (QPSK) and information for indicating that a type of the bits corresponds to the RIM-RS.

11. An electronic device of a radio unit (RU), comprising:

    a fronthaul transceiver;
    at least one radio frequency (RF) transceiver; and
    at least one processor coupled to the fronthaul transceiver and the at least one RF transceiver,
    wherein the at least one processor is configured to:

    receive, from a distribute unit (DU) through the fronthaul transceiver, configuration information for remote interference management (RIM) - reference signal (RS),
    receive, from the DU through the fronthaul transceiver, a message including bit data for the RIM-RS;
    generate a complex-valued symbol corresponding to the bit data for the RIM-RS;
    generate a RIM-RS signal by performing at least one of a phase rotation or a phase difference compensation for the complex-valued symbol based on the configuration information; and
    generate a baseband signal corresponding to the RIM-RS signal based on an inverse fast fourier transform (IFFT) and cyclic prefix (CP) insertion of the RU.

12. The electronic device of claim 11, wherein the at least one processor is configured to perform one of methods 2 to 10.

13. A method performed by a distributed unit (DU) comprising:

    transmitting, to a radio unit (RU), configuration information for remote interference management (RIM) - reference signal (RS); and
    transmitting, to the RU, a message including bit data for the RIM-RS,
    wherein the configuration information is used for at least one of a phase rotation or a phase difference compensation for a complex-valued symbol to generate a baseband signal through inverse fast fourier transform (IFFT) and cyclic prefix (CP) insertion of the RU, and
    wherein the complex-valued symbol corresponds to a modulation result of the bit data for the RIM-RS.

14. An electronic device of a distributed unit (DU), comprising:

    at least one transceiver including a fronthaul transceiver; and
    at least one processor coupled to the at least one transceiver,
    wherein the at least one processor is configured to:

    transmit, to a radio unit (RU) through the fronthaul transceiver, configuration information for remote interference management (RIM) - reference signal (RS); and
    transmit, to the RU through the fronthaul transceiver, a message including bit data for the RIM-RS,
    wherein the configuration information is used for at least one of a phase rotation or a phase difference compensation for a complex-valued symbol to generate a baseband signal through inverse fast fourier transform (IFFT) and cyclic prefix (CP) insertion of the RU, and
wherein the complex-valued symbol corresponds to a modulation result of the bit data for the RIM-RS.

**15.** A non-transitory computer-readable storage medium comprising memory storing one or more programs, wherein the one or more programs are configured to cause a radio unit (RU) to perform one of methods of claims 1 to 10, or to cause a distributed unit (DU) to perform a method of claim 13.

FIG. 1

1. Transmit RIM-RS type 1 (S201)

0. Remote interference detected

2. Report RIM-RS (S202)
3. Mitigotion scheme (S203)
4. Restore config (S204)

OAM

4. Stop RIM-RS (S205)

Aggressor

130

210

Victim

110

150

FIG. 2A

150

Aggressor

1. Transmit RIM-RS type 1 (S231)

2. Transmit RIM-RS type 2 (RIM-RS 1 present/obsent) (S232)

0. Remote
interference
detected

Victim

130

110

## FIG. 2B

150

((I))
Aggressor

1. Transmit RIM-RS type 1 (S261)

0. Remote
interference
detected

((I))
Victim

130

110

2. Inform over Xn whether RIM-RS 1 is present/obsent (S262)

FIG. 2C

FIG. 3A

FIG. 3B

310

DU

| 410 | 420 | 430 |
| TRANSCEIVER | MEMORY | PROCESSOR |

FIG. 4A

320

RU

460

RF TRANSCEIVER

465

FRONTHAUL TRANSCEIVER

470

MEMORY

480

PROCESSOR

FIG. 4B

Regular OFDM
structure

511    512    521    522

CP    Copy    CP    Copy

Effective CP

RIM-RS
structure

533    531    532

CP    Copy    Copy

FIG. 5

310
DU

610a CONTROL/TRAFFIC BIT DATA
610b REFERENCE SIGNAL BIT DATA
612 CONTROL INFORMATION

615 BIT COMPRESSION

617 RESOURCE MAPPING

COMPRESSED BIT DATA

630

CONFIGURATION INFORMATION

635

320
RU

651 COMPLEX MAPPING

657 IFFT AND CP INSERTION

630

CONTROL INFORMATION (612)

REFERENCE SIGNAL BIT DATA (610b)

MODULATION SCHEME (661)

CHANNEL TYPE (663)

FIG. 6

FIG. 7

310
DU

RIM-RS
BIT DATA
(810) → MODULATION ~811 → CYCLIC SHIFT ~813 → PHASE DIFFERENCE COMPENSATION ~815 → RESOURCE MAPPING ~817 → RESOURCE-MAPPED MODULATION SIGNAL ~830

320
RU

IFFT AND CP INSERTION ~857

850

RIM-RS (851)    PDSCH (853)

0-TH RE        K-TH RE

FIG. 8

RIM-RS SIGNAL
OF K-TH RE
(901)

X(k)
(903)

RIM-RS SIGNAL CYCLICALLY
SHIFTED AS MANY AS CP LENGTH
FOR SECOND OFDM SYMBOL
(911)

FIG. 9A

CYCLICALLY SHIFTED
RIM-RS SIGNAL ⟶ ⊗ ⟶ RIM-RS SIGNAL CYCLICALLY
(951) SHIFTED AS MANY AS CP LENGTH
FOR SECOND OFDM SYMBOL
(961)

X(k)
(953)

FIG. 9B

FIG. 10

FIG. 11

RECEIVE CONFIGURATION INFORMATION FOR RIM-RS — S1201

RECEIVE MESSAGE INCLUDING BIT DATA FOR RIM-RS — S1203

GENERATE COMPLEX SYMBOL CORRESPONDING TO BIT DATA FOR RIM-RS — S1205

GENERATE RIM-RS SIGNAL BASED ON AT LEAST ONE OF PHASE ROTATION OR PHASE DIFFERENCE COMPENSATION — S1207

GENERATE BASEBAND SIGNAL BASED ON IFFT AND CP INSERTION — S1209

FIG. 12

FIG. 13

```
                        ┌─────────────┐
                        │    START    │
                        └──────┬──────┘
                               │
                               ▼                    S1401
                          ◇─────────◇
                    ◇                   ◇              NO
              ◇      FIRST RIM-RS SYMBOL?    ◇──────────────────┐
                    ◇                   ◇                        │
                          ◇─────────◇                           │
                               │ YES                            │
                               ▼                                │
        ┌──────────────────────────────────────┐               │
        │  CALCULATE PHASE ROTATION VALUE OF RE │── S1403       │
        └───────────────────┬──────────────────┘               │
                            │                                   │
                            ▼                                   │
        ┌──────────────────────────────────────┐               │
        │        PERFORM PHASE ROTATION         │── S1405       │
        └───────────────────┬──────────────────┘               │
                            │◄──────────────────────────────────┘
                            ▼
                     ┌─────────────┐
                     │     END     │
                     └─────────────┘
```

FIG. 14

FIG. 15

| TRANSMIT CONFIGURATION INFORMATION FOR RIM-RS | S1601 |

| TRANSMIT MESSAGE INCLUDING BIT DATA FOR RIM-RS | S1603 |

FIG. 16

## INTERNATIONAL SEARCH REPORT

International application No.

**PCT/KR2023/008562**

### A. CLASSIFICATION OF SUBJECT MATTER

**H04L 27/26**(2006.01)i; **H04L 27/20**(2006.01)i; **H04L 5/00**(2006.01)i; **H04L 5/02**(2006.01)i; **H04J 11/00**(2006.01)i

According to International Patent Classification (IPC) or to both national classification and IPC

### B. FIELDS SEARCHED

Minimum documentation searched (classification system followed by classification symbols)

H04L 27/26(2006.01); H03M 7/30(2006.01); H04B 17/345(2015.01); H04B 17/382(2015.01); H04J 11/00(2006.01); H04L 12/24(2006.01); H04L 29/06(2006.01); H04L 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: RIM(remote interference management)-RS(reference signal), 프론트홀(fronthaul), RU(radio unit), DU(distributed unit), 복소(complex-valued), 심볼(symbol), 위상(phase), IFFT(inverse fast fourier transform), CP(cyclic prefix)

### C. DOCUMENTS CONSIDERED TO BE RELEVANT

| Category* | Citation of document, with indication, where appropriate, of the relevant passages | Relevant to claim No. |
|---|---|---|
| Y | KR 10-2022-0046181 A (SAMSUNG ELECTRONICS CO., LTD.) 14 April 2022 (2022-04-14) See paragraphs [0037], [0069], [0072], [0074], [0077]-[0079] and [0099]; and claims 1-2 and 4. | 1-15 |
| Y | US 2022-0006552 A1 (APPLE INC.) 06 January 2022 (2022-01-06) See paragraphs [0013] and [0079]-[0082]; and claim 1. | 1-15 |
| A | WO 2022-015598 A1 (QUALCOMM INCORPORATED) 20 January 2022 (2022-01-20) See paragraphs [0083]-[0084]. | 1-15 |
| A | WO 2022-046980 A2 (QUALCOMM INCORPORATED) 03 March 2022 (2022-03-03) See paragraphs [0191]-[0197]. | 1-15 |

| ✓ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 October 2023** | **16 October 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/008562**

### C.    DOCUMENTS CONSIDERED TO BE RELEVANT

| Category* | Citation of document, with indication, where appropriate, of the relevant passages | Relevant to claim No. |
|---|---|---|
| A | US 2022-0173819 A1 (CHINA MOBILE COMMUNICATION CO., LTD. RESEARCH INSTITUTE et al.) 02 June 2022 (2022-06-02)<br>See claims 1-6 and 10. | 1-15 |

Form PCT/ISA/210 (second sheet) (July 2022)

**INTERNATIONAL SEARCH REPORT**
Information on patent family members

International application No.

**PCT/KR2023/008562**

| Patent document cited in search report | | | Publication date (day/month/year) | Patent family member(s) | | | Publication date (day/month/year) |
|---|---|---|---|---|---|---|---|
| KR | 10-2022-0046181 | A | 14 April 2022 | US | 2023-0239112 | A1 | 27 July 2023 |
| | | | | WO | 2022-075724 | A1 | 14 April 2022 |
| US | 2022-0006552 | A1 | 06 January 2022 | CN | 112956153 | A | 11 June 2021 |
| | | | | CN | 113196697 | A | 30 July 2021 |
| | | | | EP | 3874666 | A1 | 08 September 2021 |
| | | | | EP | 3874666 | A4 | 20 July 2022 |
| | | | | US | 2021-0385035 | A1 | 09 December 2021 |
| | | | | US | 2023-0014343 | A1 | 19 January 2023 |
| | | | | WO | 2020-068625 | A1 | 02 April 2020 |
| | | | | WO | 2020-092820 | A1 | 07 May 2020 |
| WO | 2022-015598 | A1 | 20 January 2022 | CN | 115804013 | A | 14 March 2023 |
| | | | | EP | 4183050 | A1 | 24 May 2023 |
| | | | | US | 2023-0199557 | A1 | 22 June 2023 |
| WO | 2022-046980 | A2 | 03 March 2022 | WO | 2022-046980 | A3 | 07 April 2022 |
| US | 2022-0173819 | A1 | 02 June 2022 | CN | 111756492 | A | 09 October 2020 |
| | | | | CN | 111756492 | B | 22 July 2022 |
| | | | | EP | 3952181 | A1 | 09 February 2022 |
| | | | | JP | 2022-528085 | A | 08 June 2022 |
| | | | | WO | 2020-192764 | A1 | 01 October 2020 |

Form PCT/ISA/210 (patent family annex) (July 2022)